# EUROPÄISCHE PATENTSCHRIFT

(11) **EP 4 371 706 B1**
(45) Veröffentlichungstag und Bekanntmachung des Hinweises auf die Patenterteilung: **12.02.2025**
(21) Anmeldenummer: 22207540.0
(22) Anmeldetag: 15.11.2022
(51) Int. Cl.: B25B 7/16, B25B 27/14, H01R 43/042

(54) **CRIMPZANGE, CRIMPZANGENKOPF, CRIMZANGENBETÄTIGUNGSBAUGRUPPE UND VERFAHREN ZUR MONTAGE EINER CRIMPZANGE**
CRIMPING TOOL, CRIMPING TOOL HEAD, CRIMPING TOOL ACTUATING ASSEMBLY AND METHOD FOR ASSEMBLING A CRIMPING TOOL
PINCE DE SERTISSAGE, TÊTE DE PINCE DE SERTISSAGE, MODULE D'ACTIONNEMENT DE PINCE DE SERTISSAGE ET PROCÉDÉ DE MONTAGE D'UNE PINCE DE SERTISSAGE

(43) Veröffentlichungstag der Anmeldung: 22.05.2024
(73) Patentinhaber: WEZAG GmbH & Co. KG, 35260 Stadtallendorf (DE)
(72) Erfinder: Glockseisen, Thomas, 40217 Düsseldorf (DE); Gebhard, Gunthard, 35287 Amöneburg (DE); Ramosino, Marco, 35260 Stadtallendorf (DE)
(74) Vertreter: REHBERG HÜPPE + PARTNER

(56) Entgegenhaltungen:
- DE-C1- 10 056 900

## Beschreibung

### TECHNISCHES GEBIET DER ERFINDUNG

Die Erfindung betrifft eine Crimpzange, die Einsatz findet zum Verpressen oder Vercrimpen (im folgenden "Vercrimpen") eines Werkstücks, bei dem es sich insbesondere um einen Stecker mit einem darin angeordneten Kabel handelt. Mittels der Crimpzange kann bspw. ein sogenannter "Leitercrimp" herbeigeführt werden, indem ein Vercrimpen eines Kontaktbereichs des Steckers mit dem elektrischen Leiter des Kabels erfolgt und/oder ein sogenannter "Isolationscrimp" herbeigeführt werden, bei dem ein Klemmbereich des Steckers mit dem Isoliermantel des Kabels vercrimpt wird. Hinsichtlich möglicher Anwendungsgebiete einer derartigen Crimpzange wird auf die Crimpzangen verwiesen, welche auf der Internetseite www.wezag.de angeboten und beschrieben werden.

Des Weiteren betrifft die Erfindung einen Crimpzangenkopf sowie eine Crimpzangenbetätigungsbaugruppe einer Crimpzange und ein Verfahren zur Montage einer Crimpzange.

### STAND DER TECHNIK

DE 100 569 00 C1 offenbart eine Crimpzange, die eine Crimpzangenbetätigungsbaugruppe sowie einen Crimpzangenkopf aufweist. Die Crimpzangenbetätigungsbaugruppe verfügt über zwei Handhebel, die über einen Schwenkbolzen verschwenkbar miteinander verbunden sind. An den Handhebeln ist jeweils beabstandet von dem Schwenkbolzen eine Zuglasche angelenkt. Die Crimpzangenbetätigungsbaugruppe verfügt über ein Zwangsgesperre, mittels dessen bei einem Durchlaufen eines Crimphubs eine einmal erreichte Teilschließstellung der Handhebel ratschenartig gesichert wird und nur am Ende des Crimphubs eine Öffnungsbewegung der Handhebel ermöglicht wird. Der Crimpzangenkopf verfügt über einen Zangenkopfrahmen, an welchem eine feste Gesenkhälfte fixiert ist und eine bewegliche Gesenkhälfte in Richtung einer Crimpachse verschieblich geführt ist. Die bewegliche Gesenkhälfte ist über eine Federeinrichtung so an dem Zangenkopfrahmen abgestützt, dass die Federeinrichtung die Gesenkhälfte in eine Öffnungsrichtung beaufschlagt. Der Zangenkopfrahmen verfügt über sich parallel zueinander erstreckende Rahmenplatten, zwischen denen die feste Gesenkhälfte gehalten ist und die bewegliche Gesenkhälfte geführt ist. Für die Montage der Crimpzangenbetätigungsbaugruppe an dem Crimpzangenkopf weist die bewegliche Gesenkhälfte eine einseitig in Richtung des Schwenkbolzens der Crimpzangenbetätigungsbaugruppe offene, U-förmige Schwenkbolzen-Aufnahme auf. Des Weiteren verfügt der Zangenkopfrahmen über Zuglaschen-Kopplungseinrichtungen, die vertikal zur Zangenkopfebene orientierte Durchgangsbohrungen der Rahmenplatten aufweisen. Die Zuglaschen verfügen jeweils in dem Endbereich, der der Anlenkung an die Handhebel abgewandt ist, ebenfalls über eine vertikal zur Zangenkopfebene orientierte Durchgangsbohrung. Für die Montage wird die Crimpzangenbetätigungsbaugruppe so an den Crimpzangenkopf angenähert, dass der Schwenkbolzen, der die Handhebel verschwenkbar miteinander verbindet, in die Schwenkbolzen-Aufnahme eintritt. Gleichzeitig werden die Zuglaschen so zwischen die Rahmenplatten geschwenkt, dass die Bohrungen der Rahmenplatten fluchten mit den Bohrungen der Zuglaschen. In die fluchtenden Bohrungen werden dann Kopplungsbolzen oder -niete eingesetzt. In dem montierten Zustand ist der Crimpzangenkopf mit den Rahmenplatten und den darin angeordneten Zuglaschen zwischen Köpfen der Kopplungsbolzen und einer Rastkugel des Kopplungsbolzens gefangen.

### AUFGABE DER ERFINDUNG

Der vorliegenden Erfindung liegt die Aufgabe zugrunde, eine Crimpzange vorzuschlagen, welche hinsichtlich
- der Herstellung und/oder
- der Montage und/oder
- der Demontage und/oder
- der Verwendung einer Crimpzangenbetätigungsbaugruppe mit unterschiedlichen Crimpzangenköpfen
verbessert ist.

Des Weiteren liegt der Erfindung die Aufgabe zugrunde, eine in diesem Zusammenhang verbesserte Crimpzangenbetätigungsbaugruppe und einen verbesserten Crimpzangenkopf vorzuschlagen. Schließlich liegt der Erfindung die Aufgabe zugrunde, ein verbessertes Verfahren zur Montage einer derartigen Crimpzange vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Crimpzange, die zwei Handhebel aufweist, die über einen Schwenkbolzen verschwenkbar miteinander verbunden sind. Zwei Zuglaschen sind beabstandet von dem Schwenkbolzen an den Handhebeln angelenkt. Die Crimpzange weist einen Crimpzangenkopf auf. Der Crimpzangenkopf verfügt über einen Zangenkopfrahmen, eine Federeinrichtung und eine Gesenkhälfte. Diese Gesenkhälfte ist verschieblich in Richtung einer Crimpachse an dem Zangenkopfrahmen geführt. Über die Federeinrichtung ist die Gesenkhälfte derart an den Zangenkopfrahmen abgestützt, dass die Federeinrichtung die Gesenkhälfte in eine Öffnungsrichtung beaufschlagt. Die Federeinrichtung kann damit eine automatische Öffnung der Gesenkhälften (und damit unter Umständen auch der Handhebel) am Ende eines Crimphubs herbeiführen. Die Gesenkhälfte weist eine einseitig offene Schwenkbolzen-Aufnahme auf.

Bei der erfindungsgemäßen Crimpzange ist mindestens eine Zuglasche über eine Kopplungseinrichtung verschwenkbar mit dem Zangenkopfrahmen verbunden. Zur Vereinfachung der Beschreibung wird im Folgenden davon ausgegangen, dass beide Zuglaschen jeweils über eine Kopplungseinrichtung verschwenkbar mit dem Zangenkopfrahmen verbunden sind, ohne dass dies zwingend der Fall ist.

Der Schwenkbolzen ist in dem montierten Zustand der Crimpzange in der Schwenkbolzen-Aufnahme angeordnet. Durch die erläuterte Art der Schwenkverbindungen und der hierdurch hervorgerufenen Kinematik ruft eine Verschwenkung der Handhebel eine Relativbewegung der beweglichen Gesenkhälfte gegenüber dem Zangenkopfrahmen hervor, sodass beispielsweise mit einer Verschwenkung der Handhebel in Schließrichtung der Crimphub mit einer Schließung der beiden Gesenkhälften hervorgerufen werden kann.

Erfindungsgemäß wird vorgeschlagen, dass abweichend zu dem eingangs genannten Stand der Technik als Kopplungsausnehmungen für die Kopplung der Zuglaschen mit dem Zangenkopfrahmen nicht Bohrungen mit einem randgeschlossenen Querschnitt verwendet werden, die ein Einsetzten der Kopplungsbolzen vertikal zur Zangenkopfebene bedingen. Vielmehr werden erfindungsgemäß Kopplungseinrichtungen für die Kopplung der Zuglaschen an dem Zangenkopfrahmen verwendet, die jeweils eine einseitig offene Kopplungsausnehmung und ein Kopplungselement aufweisen. Die Kopplung zwischen der Kopplungsausnehmung und dem Kopplungselement (und damit auch die Kopplung zwischen den Zuglaschen und dem Zangenkopfrahmen) ist mittels einer relativen Verschwenkung zwischen der Kopplungsausnehmung und dem Kopplungselement in Richtung der Zangenkopfebene herbeiführbar. Für diese Kopplung ist insbesondere nicht das Einführen eines Kopplungsbolzens vertikal zur Zangenkopfebene erforderlich, wie dies für den eingangs genannten Stand der Technik erfolgt. Die erfindungsgemäß herbeigeführte Kopplung kann vielmehr auf besonders einfache Weise herbeigeführt und wieder gelöst werden, indem die hierfür erforderliche relative Verschwenkung herbeigeführt wird, mit der das Kopplungselement über die Randöffnung in die Kopplungsausnehmung eintritt. Der Eintritt erfolgt hier mit einer Bewegung in der Zangenkopfebene (oder parallel hierzu) und auf einer Kreisbahn um das Schwenklager, mit dem die Zuglasche an dem zugeordneten Handhebel angelenkt ist.

Gleichzeitig trägt die Erfindung dem Erfordernis Rechnung, dass vermieden werden muss, dass sich bei der Benutzung der Crimpzange die Kopplung ungewollt löst. Dies wird erfindungsgemäß dadurch gewährleistet, dass die Federeinrichtung, die für die Beaufschlagung der beweglichen Gesenkhälfte in Öffnungsrichtung zuständig ist, die Kopplung zwischen der Kopplungsausnehmung und dem Kopplungselement sichert. Dies bedeutet, dass die Federeinrichtung eine Federkraft erzeugt, die das Kopplungselement in der koppelnden Stellung in der Kopplungsausnehmung hält. Um die Kopplung zu lösen muss somit nicht nur die Verschwenkung des Kopplungselements aus der Kopplungsausnehmung erfolgen, sondern auch eine Überwindung dieser Beaufschlagung durch die Federeinrichtung erfolgen.

Möglich ist im Rahmen der Erfindung, dass nach einer derartigen Kopplung und Sicherung der Kopplung zusätzliche Kopplungsmaßnahmen getroffen werden. Vorzugsweise wird allerdings die zuverlässige Kopplung ausschließlich durch die erläuterte Wechselwirkung zwischen den Kopplungsausnehmungen und den Kopplungselementen und die Sicherung durch die Federeinrichtung gewährleistet.

Für einen weiteren Vorschlag der Erfindung sind die Kopplungsausnehmungen so ausgebildet und deren Öffnungen sind so orientiert, dass diese Eintrittsrichtungen der Kopplungselemente in die Kopplungsausnehmungen vorgeben, die unter einem spitzen Winkel gegenüber der Crimpachse geneigt sind. Beispielsweise sind die Kopplungsausnehmungen als nach außen offene Langlöcher oder als U-förmige Aufnahmen ausgebildet, wobei auch die Seitenschenkel des U beliebig divergieren können und/oder gradlinig oder kurvenförmig ausgebildet sein können. Die Neigung der Kopplungsausnehmungen unter dem spitzen Winkel hat zur Folge, dass einerseits die Federeinrichtung eine von dem spitzen Winkel abhängige Beaufschlagungskraftkomponente erzeugen, die bestrebt ist, das jeweilige Kopplungselement in die Kopplungsausnehmung und in Richtung des Bodens der Kopplungsausnehmung zu drücken oder ziehen. Andererseits hat der spitze Winkel die Folge, dass die Kopplungselemente nicht quer zu der Crimpachse bewegt werden können, sondern mit der Begrenzung der Kopplungsausnehmung kollidieren, womit eine Sicherung gegenüber einem ungewünschten Austritt des Kopplungselements aus der Kopplungsausnehmung gewährleistet wird.

Im Folgenden werden zwei unterschiedliche Varianten für die erfindungsgemäße Ausgestaltung der Crimpzange erläutert, ohne dass eine Einschränkung der Erfindung auf diese Varianten erfolgen soll:
a) Für eine erste Variante sind die Kopplungsausnehmungen von dem Zangenkopfrahmen ausgebildet. Beispielsweise können die Kopplungsausnehmungen in dem der Crimpzangenbetätigungsbaugruppe zugewandten Endbereich und lateral außenliegend von dem Zangenkopfrahmen ausgebildet werden. Hierbei erstreckt sich die Längsachse der Kopplungsausnehmungen vorzugsweise in der Zangenkopfebene. Hingegen sind in diesem Fall die Kopplungselemente Kopplungsbolzen, Kopplungszapfen oder Kopplungsfortsätze der Zuglaschen. Diese sind in dem der Anlenkung an den Handhebeln abgewandten Endbereichen der Zuglaschen angeordnet und erstrecken sich vertikal zu Zangenkopfebene.

Möglich ist für diese erste Variante, dass der Zangenkopfrahmen zwei sich parallel erstreckende Rahmenplatten aufweist, wobei der Zangenkopfrahmen diesbezüglich und hinsichtlich der Aufnahme und Führung der Gesenkhälften grundsätzlich dem eingangs eingeführten Stand der Technik entsprechen kann. In diesem Fall weisen die beiden Rahmenplatten aber jeweils eine Kopplungsteilausnehmung auf, die zusammen die Kopplungsausnehmung ausbilden. Diesbezüglich weicht somit der Zangenkopfrahmen von dem Zangenkopfrahmen gemäß DE 100 056 900 C1 ab.

Eine Zuglasche kann einen Grundkörper und auf beiden Seiten von dem Grundkörper angeordnete fluchtende Kopplungsbolzen, Kopplungszapfen oder Kopplungsfortsätze aufweisen, die sich vertikal zur Zangenkopfebene erstrecken. Hierbei können der Grundkörper einerseits und die Kopplungsbolzen, Kopplungszapfen oder Kopplungsfortsätze andererseits von einer integralen, einstückigen Komponente ausgebildet sein oder diese können als separate Bauelemente ausgebildet sein und in der Zuglasche fest miteinander verbunden sein. Für diese Ausgestaltung erstreckt sich der Grundkörper in dem hereingeschwenkten Zustand in den Zwischenraum zwischen den Rahmenplatten, während dann in dem montierten Zustand die Kopplungsbolzen, Kopplungszapfen oder Kopplungsfortsätze in den Kopplungsteilausnehmungen angeordnet sind.

Bilden der Grundkörper und die Kopplungsbolzen, Kopplungszapfen oder Kopplungsfortsätze einstückige Zuglaschen, können diese beispielsweise in einem MIM-Herstellungsverfahren hergestellt sein.

Eine weiter verbesserte Wechselwirkung zwischen den Zuglaschen und dem Zangenkopfrahmen kann sich ergeben, wenn für einen weiteren Vorschlag die Kopplungsbolzen, Kopplungszapfen oder Kopplungsfortsätze in dem von dem Grundkörper abgewandten Endbereich eine Erweiterung aufweisen. In diesem Fall können die Rahmenplatten jeweils zwischen dieser Erweiterung und dem Grundkörper gefangen sein. Es ist somit für die Montage und Demontage die schwenkende Einführung der Kopplungsbolzen, Kopplungszapfen oder Kopplungsfortsätze in die Kopplungsausnehmung möglich, während vertikal zu der Zangenkopfebene eine Sicherung gegenüber unerwünschten Bewegungen dadurch gewährleistet werden kann, dass die Rahmenplatten zwischen einer Erweiterung und dem Grundkörper gefangen sind.
b) Für eine zweite Variante der Crimpzange sind die Zuglaschen von den Kopplungsausnehmungen ausgebildet. In diesem Fall sind die Kopplungselemente als Kopplungsbolzen, Kopplungszapfen oder Kopplungsfortsätze ausgebildet, die von dem Zangenkopfrahmen ausgebildet sind oder von dem Zangenkopfrahmen getragen sind. Werden für die Montage die Zuglaschen in die Montagestellung verschwenkt, treten die Kopplungsbolzen, Kopplungszapfen oder Kopplungsfortsätze des Zangenkopfrahmens in die Kopplungsausnehmungen der Zuglaschen ein, womit eine mittels der Federeinrichtung gesicherte Kopplung erfolgen kann, wie dies zuvor erläutert worden ist.

Auch für die zweite Variante kann der Zangenkopfrahmen zwei sich parallel erstreckende Rahmenplatten aufweisen, die dann über einen Kopplungsbolzen miteinander verbunden sein können. In diesem Fall kann der Kopplungsbolzen, der die Rahmenplatten miteinander verbindet auch multifunktional verwendet werden: Die Zuglasche weist einen Grundkörper auf, der die Kopplungsausnehmungen ausbildet und sich in dem Zwischenraum zwischen den Rahmenplatten erstreckt. Der die Rahmenplatten verbindende Kopplungsbolzen ist dann in den Kopplungsausnehmungen angeordnet.

Grundsätzlich möglich ist im Rahmen der Erfindung, dass in der montierten Stellung die Zuglaschen im Inneren des Zangenkopfes verlaufen, sodass diese bei Blickrichtung vertikal zur Zangenkopfebene durch den Zangenkopfrahmen oder die Rahmenplatten abgedeckt sein können, was für ausgewählte Betriebsstellungen der Crimpzange, einen Teilcrimphub oder während des gesamten Crimphubs gelten kann. Für einen Vorschlag der Erfindung sind an den Zuglaschen seitlich aus den Zangenkopfrahmen (permanent, für einen Teilcrimphub und insbesondere die Öffnungsstellung) herausstehende Betätigungselemente vorgesehen, bei denen es sich beispielsweise um Flügel, Erweiterungen, Greifflächen u. ä. handeln kann. Über diese Betätigungselemente können manuell Kräfte auf die Zuglaschen appliziert werden, die dann die Zuglaschen in die montierte Stellung verschwenken können oder auch die Zuglaschen zur Demontage verschwenken können.

Ein weiterer Vorschlag der Erfindung widmet sich der Notwendigkeit, dass für die Montage der Crimpzangenbetätigungsbaugruppe an dem Crimpzangenkopf und die Ermöglichung des Eintritts der Kopplungselemente in die Kopplungsausnehmungen erforderlich ist, dass der Benutzer die bewegliche Gesenkhälfte entgegen der Beaufschlagung der Federeinrichtung in Schließrichtung bewegt. Die gleichzeitige Herbeiführung der Relativbewegungen einerseits zwischen den Kopplungselementen und den Kopplungsausnehmungen und andererseits zur Herbeiführung der Bewegung der beweglichen Gesenkhälfte in Schließrichtung kann dabei erhöhte Anforderungen an den Monteur stellen. Hier schafft ein Vorschlag der Erfindung Abhilfe, gemäß welchem die Zuglaschen und die bewegliche Gesenkhälfte Kontaktflächen aufweisen, die bei der Montage aneinander zur Anlage kommen. Die Kontaktflächen haben dabei eine Orientierung derart, dass auf die Zuglaschen aufgebrachte Montagekräfte in eine Kraftkomponente umgewandelt werden, die eine Erhöhung der Beaufschlagung der Federeinrichtung und eine Bewegung der beweglichen Gesenkhälfte in Schließrichtung zur Folge haben. Verschwenkt somit ein Monteur die Zuglaschen zur Herbeiführung der Kopplung und beaufschlagt der Monteur die Zuglaschen mit einer in die Kopplungsstellung orientierten Montagekraft, wird eine Kraftkomponente der Montagekraft genutzt, um tatsächlich den Eintritt des Kopplungselements in die Kopplungsausnehmung herbeizuführen. Eine andere Kraftkomponente gewährleistet die für diesen Eintritt des Kopplungselements in die Kopplungsausnehmung erforderliche Bewegung der beweglichen Gesenkhälfte in Schließrichtung. Auf diese Weise kann die Handhabung bei der Montage signifikant vereinfacht werden.

Eine weitere Lösung der der Aufgabe zugrunde liegenden Erfindung stellt ein Crimpzangenkopf dar, der für eine Crimpzange der zuvor erläuterten Art, insbesondere gemäß der ersten Variante, bestimmt ist. Dieser Crimpzangenkopf verfügt über Kopplungseinrichtungen, die einseitig offene Kopplungsausnehmungen ausbilden. Vorzugsweise handelt es sich um Kopplungsteilausnehmungen der Rahmenplatten, die als offene Langlöcher oder Aufnahmen mit randoffenem Querschnitt in den der Crimpzangenbetätigungsbaugruppe zugewandten Endbereichen der Rahmenplatten sowie in dem hinsichtlich der Crimpzange lateral außenliegenden Bereich der Rahmenplatten angeordnet sind.

Eine weitere Lösung der der Erfindung zugrunde liegenden Aufgabe stellt eine Crimpzangenbetätigungsbaugruppe für eine Crimpzange der zuvor erläuterten Art, insbesondere gemäß der zweiten Variante, dar. Die Crimpzangenbetätigungsbaugruppe verfügt über zwei Handhebel, die über einen Schwenkbolzen verschwenkbar miteinander verbunden sind. Zwei Zuglaschen sind beabstandet von dem Schwenkbolzen an den Handhebeln angelenkt. Die Zuglaschen weisen Kopplungseinrichtungen auf, über die die Crimpzangenbetätigungsbaugruppe mit einem Crimpzangenkopf koppelbar ist. In diesem Fall sind die Zuglaschen einseitig offene Kopplungsausnehmungen, die ebenfalls als einseitig offene Langlöcher oder anderweitige Aufnahmen mit einem randoffenen Querschnitt ausgebildet sein können.

Eine weitere Lösung der der Erfindung zugrunde liegenden Aufgabe stellt ein Verfahren zur Montage einer Crimpzange der zuvor erläuterten Art dar. Bei diesem Verfahren erfolgt ein Einführen des Schwenkbolzens in die Schwenkbolzen-Aufnahme der Gesenkhälfte. Gleichzeitig oder hieran anschließend erfolgt ein Verbinden der Zuglaschen mit dem Crimpzangenkopf durch Einführen der Kopplungselemente in die Kopplungsausnehmungen bei gleichzeitiger Komprimierung der Federeinrichtung derart, dass in Folge der Beaufschlagung durch die Federeinrichtung die Kopplungselemente gegenüber einem Wiederaustritt aus den Kopplungsausnehmungen gesichert sind.

Möglich ist dabei, dass der Eintritt der Kopplungselemente in die Kopplungsausnehmungen bewirkt wird durch eine manuelle Betätigung der zuvor erläuterten, seitlich aus dem Zangenkopfrahmen herausstehenden Betätigungselemente und/oder die für den Eintritt erfindlichen Bewegung der beweglichen Gesenkhälfte in Schließrichtung herbeigeführt wird über die zuvor erläuterten Kontaktflächen zwischen den Zuglaschen und der beweglichen Gesenkhälfte.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer Explosionsdarstellung eine Crimpzangenbetätigungsbaugruppe einer Crimpzange.
- **Fig. 2**: zeigt in einer räumlichen Darstellung die Crimpzangenbetätigungsbaugruppe einer Crimpzange gemäß Fig. 1 in montiertem Zustand.
- **Fig. 3**: zeigt in einer Explosionsdarstellung einen Crimpzangenkopf einer Crimpzange, der zusammen mit einer Crimpzangenbetätigungsbaugruppe gemäß Fig. 1 und 2 verwendet werden kann.
- **Fig. 4**: zeigt in einer räumlichen Darstellung den Crimpzangenkopf einer Crimpzange gemäß Fig. 3 in montiertem Zustand.
- **Fig. 5 bis 8**: zeigen in räumlichen Darstellungen eine Montage und den Betrieb einer Crimpzange mit einer Crimpzangenbetätigungsbaugruppe gemäß Fig. 1 und 2 sowie einem Crimpzangenkopf gemäß Fig. 3 und 4.
- **Fig. 9**: zeigt einen teilmontierten Zustand einer Crimpzange gemäß Fig. 5 bis 8 in einer Draufsicht auf die Zangenkopfebene.
- **Fig. 10**: zeigt die Crimpzange gemäß Fig. 5 bis 9 in einer geschnittenen Darstellung bei Schnittführung parallel zur Zangenkopfebene.
- **Fig. 11**: zeigt die Crimpzange gemäß Fig. 5 bis 10 in einer Schließstellung in einer Draufsicht auf die Zangenkopfebene.
- **Fig. 12**: zeigt die Crimpzange gemäß den Fig. 5 bis 11 in der Schließstellung in geschnittener Darstellung bei Schnittführung parallel zur Zangenkopfebene.
- **Fig. 13**: zeigt in einer räumlichen Darstellung eine Zuglasche, wie diese Einsatz finden kann in einer Crimpzangenbetätigungsbaugruppe gemäß Fig. 1 und 2 und einer Crimpzange gemäß Fig. 5 bis 12.
- **Fig. 14**: zeigt in einer Explosionsdarstellung eine weitere Ausführungsform einer Crimpzangenbetätigungsbaugruppe.
- **Fig. 15**: zeigt in einer räumlichen Darstellung die montierte Crimpzangenbetätigungsbaugruppe gemäß Fig. 14.
- **Fig. 16**: zeigt in einer Explosionsdarstellung einen Crimpzangenkopf, der gemeinsam mit einer Crimpzangenbetätigungsbaugruppe gemäß Fig. 14 und 15 einsetzbar ist.
- **Fig. 17**: zeigt den Crimpzangenkopf gemäß Fig. 16 in montiertem Zustand in einer räumlichen Darstellung.
- **Fig. 18 bis 21**: zeigen eine Crimpzange, die eine Crimpzangenbetätigungsbaugruppe gemäß Fig. 14 und 15 sowie einen Crimpzangenkopf gemäß Fig. 16 und 17 aufweist, in unterschiedlichen Montage- und Betriebsstellungen in einer Draufsicht auf die Zangenkopfebene, teilweise in geschnittenem Zustand bei Schnittführung parallel zur Zangenkopfebene.
- **Fig. 22 und 23**: zeigen in räumlichen Darstellungen unterschiedliche Ausgestaltungsmöglichkeiten von Zuglaschen einer Crimpzangenbetätigungsbaugruppe gemäß Fig. 14 und 15 und einer Crimpzange gemäß Fig. 18 bis 21.

### FIGURENBESCHREIBUNG

In der folgenden Beschreibung sind teilweise Komponenten oder Merkmale, die sich hinsichtlich der Gestaltung, Geometrie und/oder Funktion entsprechen oder ähneln können, mit denselben Bezugszeichen gekennzeichnet, wobei diese dann über einen ergänzenden Buchstaben a, b, ... voneinander unterschieden sein können. In diesem Fall kann auf die Komponenten oder Merkmale mit oder ohne den ergänzenden Buchstaben Bezug genommen werden, wobei ohne Verwendung des ergänzenden Buchstabens dann eine Komponente oder ein Merkmal, mehrere Komponenten oder Merkmale oder sämtliche Komponenten oder Merkmale angesprochen sein können.

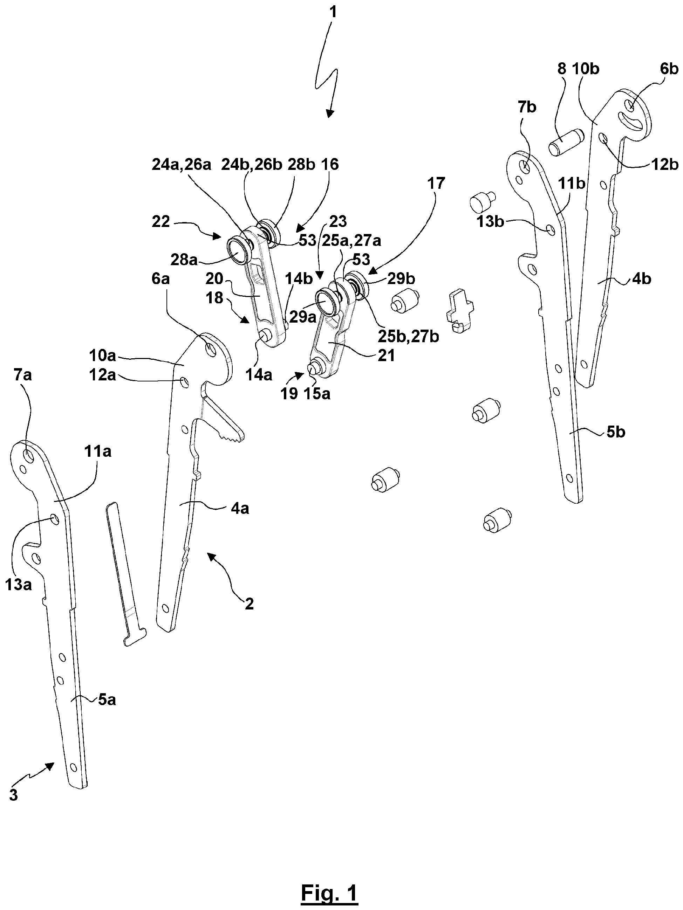

**Fig. 1** zeigt eine Crimpzangenbetätigungsbaugruppe 1. Die Crimpzangenbetätigungsbaugruppe 1 verfügt über Handhebel 2, 3. Der Handhebel 2 ist mit zwei Handhebelplatten 4a, 4b gebildet. Entsprechend ist der Handhebel 3 mit zwei Handhebelplatten 5a, 5b gebildet.

In dem dem Griffteil der Handhebel 2, 3 abgewandten Endbereich verfügen die Handhebel 2, 3 jeweils über eine Bohrung 6, 7, die hier als Bohrungen 6a, 6b der Handhebelplatten 4a, 4b sowie als Bohrungen 7a, 7b der Handhebelplatten 5a, 5b ausgebildet sind.

Die Bohrungen 6, 7 bilden Lageraugen, durch welche sich ein Schwenkbolzen 8 erstreckt, womit ein Schwenklager 9 gebildet ist. Über das Schwenklager 9 sind die Handhebel 2, 3 verschwenkbar miteinander verbunden, so dass diese eine Öffnungs- und Schließbewegung für die Herbeiführung eines Crimphubs und eines Öffnungshubs ausführen können.

Die Handhebel 2, 3 sind vorzugsweise geringfügig zueinander gekröpft ausgebildet mit Kröpfungen 10, 11. Im Bereich der Kröpfungen 10, 11 verfügen die Handhebel 2, 3 über Bohrungen 12, 13. In diesen Bohrungen 12, 13 sind Schwenkzapfen 14, 15 von Zuglaschen 16, 17 aufgenommen, womit Schwenklager 18, 19 gebildet sind, über die die Zuglaschen 16, 17 an den Handhebeln 2, 3 angelenkt sind. Für das dargestellte Ausführungsbeispiel verfügen die Zuglaschen 16, 17 jeweils auf beiden Seiten eines Grundkörpers 20, 21 über Schwenkzapfen 14a, 14b bzw. Schwenkzapfen 15a, 15b, die jeweils Aufnahme finden in Bohrungen 12a, 12b bzw. Bohrungen 13a, 13b der Handehebelplatten 4a, 4b bzw. 5a, 5b.

Die Zuglaschen 16, 17 sind geradlinig und streben- oder stangenartig ausgebildet. In dem den Schwenkzapfen 14, 15 abgewandten Endbereichen weisen die Zuglaschen 16, 17 jeweils ein Kopplungselement 22, 23 auf. Die Kopplungselemente 22, 23 verfügen auf beiden Seiten ihrer Grundkörper 20, 21 über Kopplungselementteile 24a, 24b bzw. 25a, 25b, die hier als Kopplungszapfen 26a, 26b bzw. 27a, 27b ausgebildet sind und in den von dem Grundkörper 20, 21 abgewandten Endbereichen Erweiterungen 28a, 28b, 29a, 29b aufweisen.

Für das in Fig. 1 dargestellte Ausführungsbeispiel sind die Zuglaschen 16, 17 einstückig ausgebildet, so dass die Grundkörper 20, 21, die Schwenkzapfen 14, 15 und die Kopplungselemente 22, 23 integraler Bestandteil eines einzigen Bauelements sind.

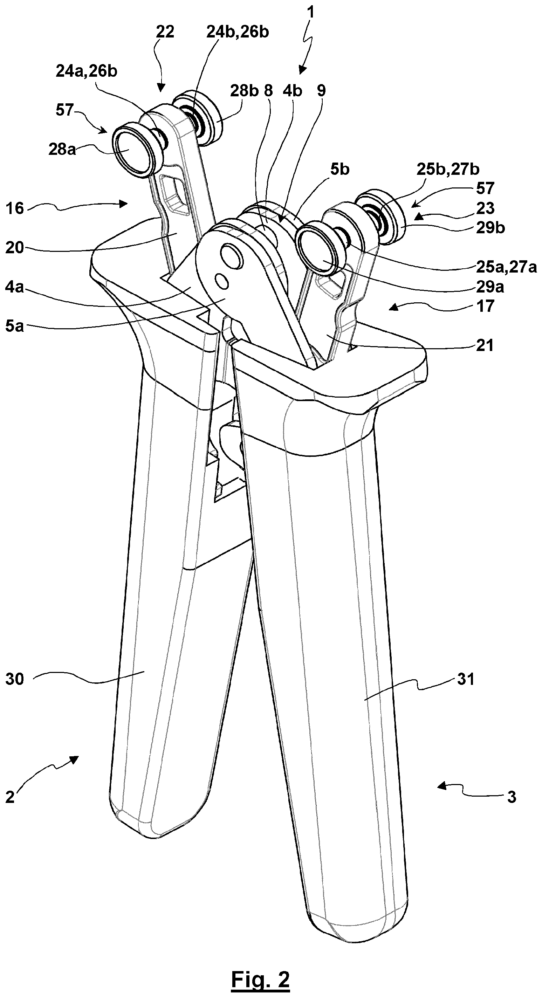

**Fig. 2** zeigt die Crimpzangenbetätigungsbaugruppe 1 in dem montierten Zustand, wobei hier zusätzlich auf die Handhebel 2, 3 elastomere Griffe 30, 31 aufgeschoben sind. Zu erkennen ist hier, dass die Zuglaschen 16, 17 mit den Kopplungselementen 22, 33 frei nach oben aus der Crimpzangenbetätigungsbaugruppe 1 herausstehen, wobei die Zuglaschen 16, 17 infolge der Anlenkung über die Schwenklager 18, 19 an den Handhebeln 2,3 frei verschwenkbar sind. Des Weiteren ist der Schwenkbolzen 8 zwischen den Handhebelplatten 4, 5 von oben frei zugänglich.

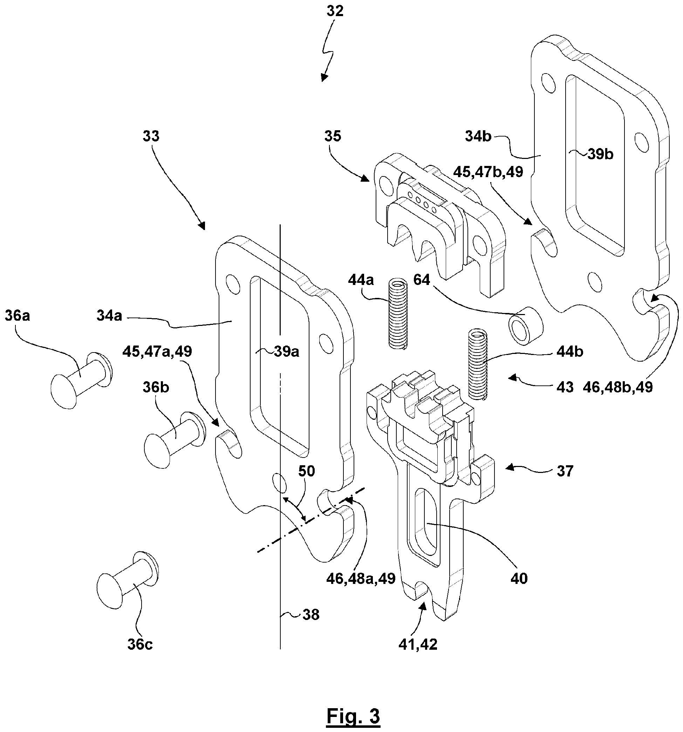

**Fig. 3** zeigt in einer räumlichen Explosionsdarstellung einen Crimpzangenkopf 32. Der Crimpzangenkopf 32 verfügt über einen Zangenkopfrahmen 33, der hier mit Rahmenplatten 34a, 34b gebildet ist. Zwischen den Rahmenplatten 34a, 34b ist eine feste Gesenkhälfte 35 angeordnet. Verbindungselemente, insbesondere Niete 36a, 36b, verbinden die Rahmenplatten 34a, 34b und die dazwischen angeordnete feste Gesenkhälfte 35 zu einer festen Baueinheit. Eine weitere Verbindung der beiden Rahmenplatten 34a, 34b erfolgt über einen weiteren Niet 36c.

Der Crimpzangenkopf 32 verfügt des Weiteren über eine bewegliche Gesenkhälfte 37. Die bewegliche Gesenkhälfte ist in Richtung einer Crimpachse 38 verschieblich an dem Zangenkopfrahmen 33 geführt, was beispielsweise dadurch erfolgen kann, dass die Rahmenplatten 34a, 34b Ausnehmungen 39a, 39b aufweisen, die seitliche Führungsflächen bilden, an denen Führungsflächen der beweglichen Gesenkhälfte 37 geführt sind. Der Niet 36c kann sich gemeinsam mit der Hülse 64 durch eine Ausnehmung 40 der beweglichen Gesenkhälfte 37 hindurch erstrecken und eine ergänzende Führung und/oder eine Begrenzung der Bewegung der beweglichen Gesenkhälfte 37 gewährleisten.

In dem der festen Gesenkhälfte 35 abgewandten Endbereich verfügt die bewegliche Gesenkhälfte 37 über eine Schwenkbolzen-Aufnahme 41. Die Schwenkbolzen-Aufnahme 41 ist für das dargestellte Ausführungsbeispiel als U-förmige Ausnehmung 42 ausgebildet, die einen randoffenen Querschnitt ausbildet. Die Schwenkbolzen-Aufnahme 41, hier die Ausnehmung 42, ist nach unten, also in dem an der Crimpzangenbetätigungsbaugruppe 1 montierten Zustand in Richtung der Crimpzangenbetätigungsbaugruppe 1, offen.

Der Crimpzangenkopf 32 verfügt über eine Federeinrichtung 43, die hier mit zwei Federn 44a, 44b gebildet ist. Die Federn 44 sind als Druckfedern ausgebildet. Die Federn 44 stützen sich mit einem Federfußpunkt an dem Zangenkopfrahmen 33 und/oder der festen Gesenkhälfte 35 ab, während der andere Federfußpunkt der Federn 44 an der beweglichen Gesenkhälfte 37 abgestützt ist. In der Öffnungsstellung, in der die Gesenkhälfte 37 den maximalen Abstand von der Gesenkhälfte 35 hat, ist die Beaufschlagung der Federeinrichtung 43 minimal, während die Beaufschlagung der Federeinrichtung 43 mit zunehmender Annäherung der Gesenkhälfte 34 an die Gesenkhälfte 35 über den Crimphub größer wird. Für das dargestellte Ausführungsbeispiel sind die Federn 44 symmetrisch auf beiden Seiten neben den Gesenkflächen der Gesenkhälften 35, 37, zwischen denen das Werkstück vercrimpt wird, angeordnet.

Der Zangenkopfrahmen 33 verfügt über Kopplungsausnehmungen 45, 46. Hierbei bilden die Rahmenplatten 34a, 34b Kopplungsausnehmungsteile 47a, 47b der Kopplungsausnehmung 45 sowie Kopplungsausnehmungsteile 48a, 48b der Kopplungsausnehmung 46.

Für das dargestellte Ausführungsbeispiel sind die Kopplungsausnehmungen 45, 46 und die Kopplungsausnehmungsteile 47, 48 als in dem außenliegenden Endbereich einseitig offene Langlöcher 49 ausgebildet. Die Langlöcher 49 sind dabei unter einem spitzen Winkel 50 gegenüber der Crimpachse 38 geneigt, wobei der Winkel 50 vorzugsweise im Bereich von 20-80° oder 30 bis 60° oder 35 bis 55° liegt. Hierbei ist der spitze Winkel 50 so orientiert, dass der Scheitelpunkt in Richtung der Crimpzangenbetätigungsbaugruppe 1 weist, so dass eine Eintrittsbewegung von außen in das Langloch 49 eine Komponente aufweist, die in Richtung der Schwenkbolzenaufnahme 41 und der Crimpzangenbetätigungsbaugruppe 1 orientiert ist. Das Langloch 49 kann nicht parallele seitliche Begrenzungen aufweisen, die einen beliebigen kurvenförmigen Verlauf bei Projektion auf die Zangenkopfebene aufweisen.

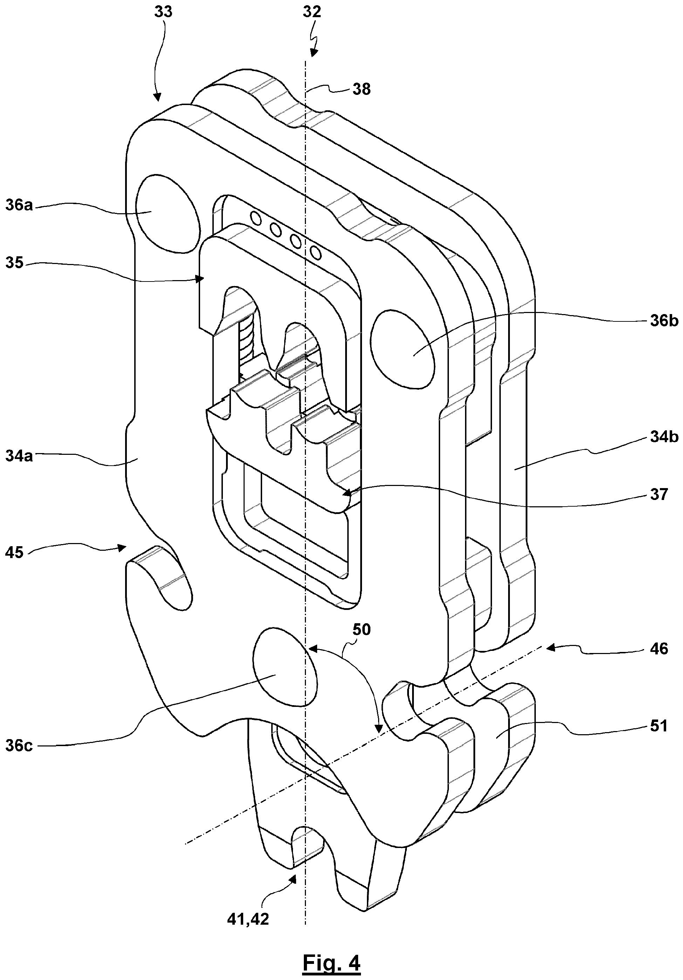

Infolge des Abstandes der Rahmenplatten 34 ergibt sich zwischen den Rahmenplatten 34 ein Zwischenraum 51 (s. **Fig. 4****),** wobei dieser Zwischenraum 51 auch zwischen den Paaren der Kopplungsausnehmungsteile 47a, 47 b sowie Kopplungsausnehmungsteile 48a, 48b vorhanden ist. Im Bereich der Niete 36a, 36b wird der Zwischenraum 51 zwischen den Rahmenplatten 34 vorgegeben durch die Gesenkhälfte 35. Hingegen ist der Niet 36c von einer Hülse 64 umgeben, die im Bereich des Niets 36c den Abstand der Rahmenplatten 34 vorgibt.

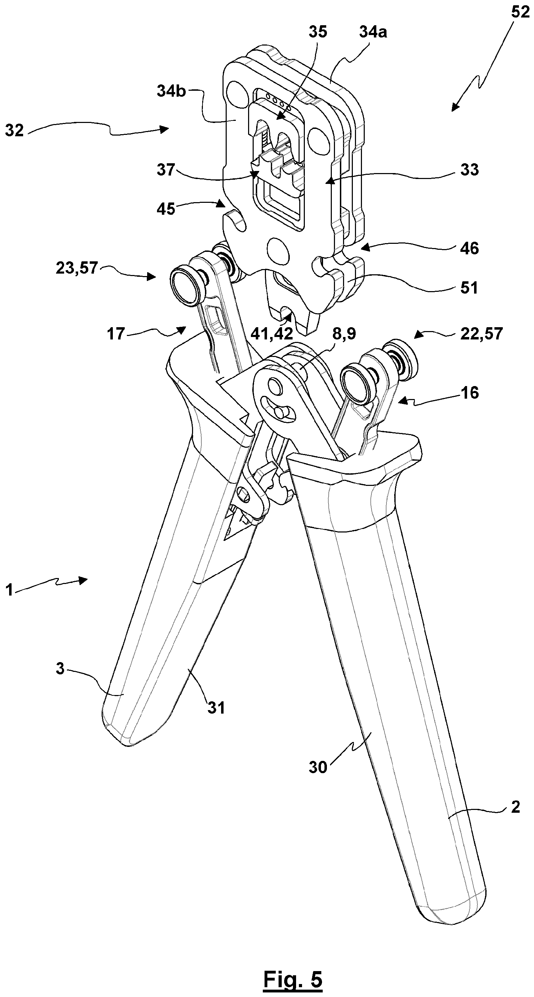

**Fig. 5** zeigt die Crimpzangenbetätigungsbaugruppe 1 und den Crimpzangenkopf 32 vor der Montage.

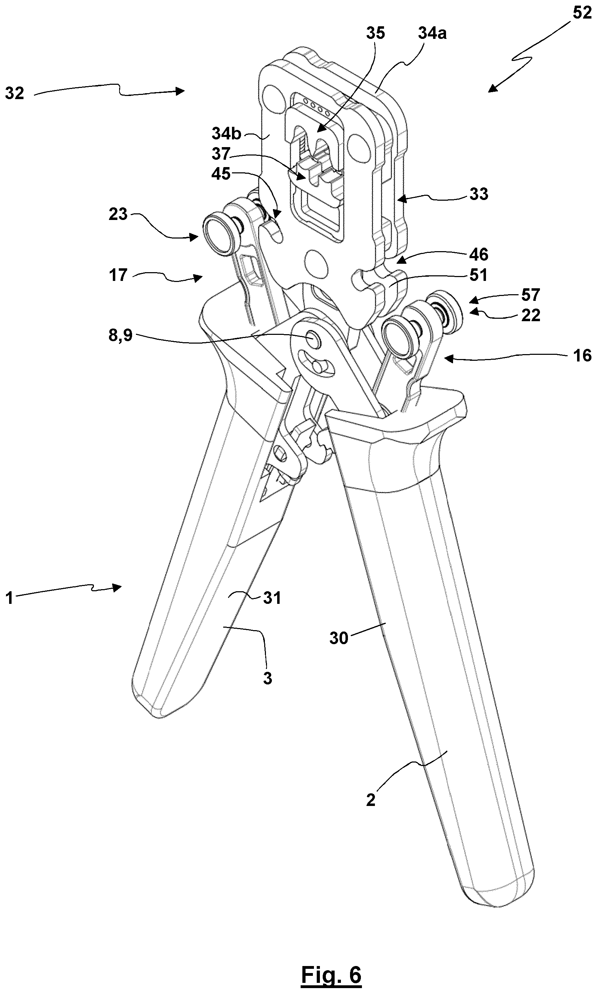

Gemäß **Fig. 6** wird für die Montage das Crimpzangenbetätigungsteil 1 so von unten an den Crimpzangenkopf 32 angenähert, dass der Schwenkbolzen 8 von unten in die Schwenkbolzen-Aufnahme 41 eintritt. Durch die Anlage des Schwenkbolzens 8 an den Boden der Schwenkbolzen-Aufnahme 41 kann zwischen der Crimpzangenbetätigungsbaugruppe 1 und dem Crimpzangenkopf 32 eine Betätigungskraft übertragen werden, die bestrebt ist, die bewegliche Gesenkhälfte 37 nach oben zu drücken. In der teilmontierten Stellung gemäß Fig. 6 befinden sich aber die Zuglaschen 16,17 noch in einer Schwenkstellung, in welcher sich diese ohne Kopplung seitlich von dem Zangenkopfrahmen 33 befinden.

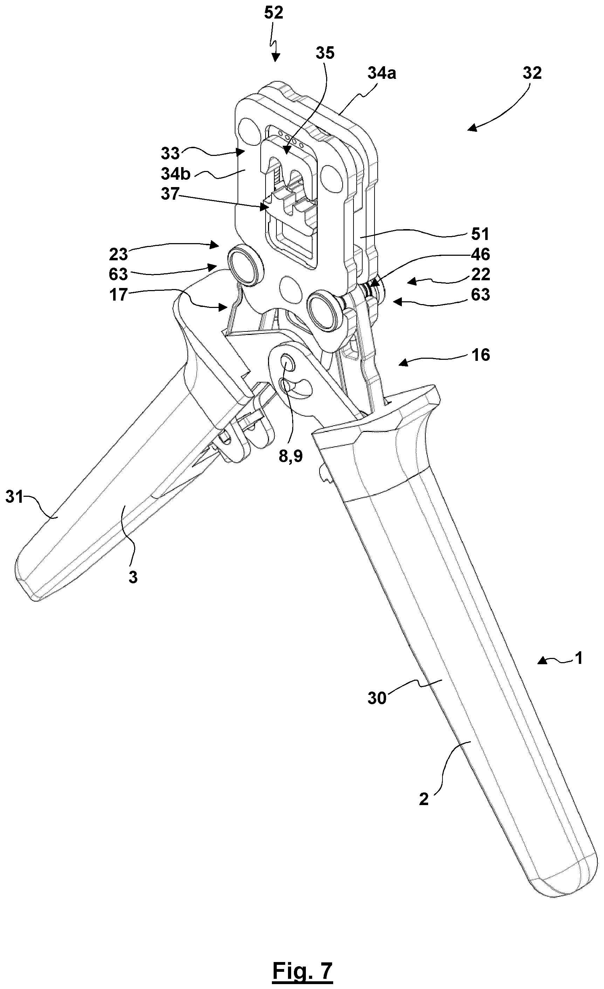

Für die weitere Montage werden gemäß **Fig. 7** die Zuglaschen 16, 17 nach innen in Richtung des Zangenkopfrahmens 33 aufeinander zu verschwenkt, bis die Kopplungselemente 22, 23 der Zuglaschen 16, 17 eintreten in die Kopplungsausnehmungen 45, 46 des Zangenkopfrahmens 33. Im vorliegenden Fall treten dabei die Kopplungszapfen 26a, 26b ein in die Kopplungsausnehmungsteile 47a, 47b der Rahmenplatten 34a, 34b und die Kopplungszapfen 27a, 27b der Zuglasche 17 treten ein in die Kopplungsausnehmungsteile 48a, 48b des Zangenkopfrahmens 33. Gleichzeitig treten die Grundkörper 20, 21 der Zuglaschen 16, 17 in den zwischen den Rahmenplatten 34a, 34b gebildeten Zwischenraum 51 ein.

Die Länge der Zuglaschen 16, 17 ist derart bemessen, dass der erläuterte Eintritt der Kopplungselement 22, 23 in die Kopplungsausnehmungen 45, 46 nur erfolgen kann, wenn eine Bewegung der beweglichen Gesenkhälfte 37 in Schließrichtung erfolgt. Diese Bewegung ist am größten, wenn die Kopplungselemente 22, 23 gerade in die Öffnungen der Kopplungsausnehmungen 45, 46 eintreten, während eine Rückbewegung der beweglichen Gesenkhälfte 37 in Öffnungsrichtung erfolgen kann, wenn sich die Kopplungselemente 22, 23 in das Innere der Kopplungsausnehmungen 45, 46 bis zu dem Boden derselben bewegen. Die für den Eintritt der Kopplungselemente 22, 23 in die Kopplungsausnehmungen 45, 46 erforderliche Teilschließbewegung ist dabei kleiner als der Crimphub und beträgt beispielsweise weniger als 20 %, weniger als 15 % oder weniger als 10 % des Crimphubs. Am Ende der Eintrittsbewegung, wenn die Kopplungselemente 22, 23 an dem Boden der Kopplungsausnehmungen 45, 46 anliegen, kann die bewegliche Gesenkhälfte 37 wieder die Ausgangsstellung, also die maximal geöffnete Stellung erreichen. Vorzugsweise verbleibt dann aber ein Teilschließweg, der beispielsweise weniger als 10 % oder weniger als 5 % des Crimphubs sein kann. Die erläuterte Teilschließbewegung und die beschriebenen Teilschließstellungen gehen mit einer Beaufschlagung der Federeinrichtung 43 einher. Die Federkraft der Federeinrichtung 43 bewirkt, dass die Kopplungselemente 22, 23 in die Kopplungsausnehmungen 45, 46 hereingezogen werden und mit einer Federkraftkomponente an den Boden der Kopplungsausnehmung 45, 46 gedrückt werden. Eine Demontage mit dem Herausführen der Kopplungselemente 22, 23 aus den Kopplungsausnehmungen 45, 46 erfordert somit eine Überwindung dieser Federkraftkomponente, die durch die Federeinrichtung 43 erzeugt wird. In dem montierten Zustand können die Erweiterungen 28a, 28b, 29a, 29b der Zuglaschen 16, 17 ein unerwünschtes Auffedern der Rahmenplatten 34a, 34b infolge der während des Crimphubs wirkenden Kräfte vermeiden oder verringern.

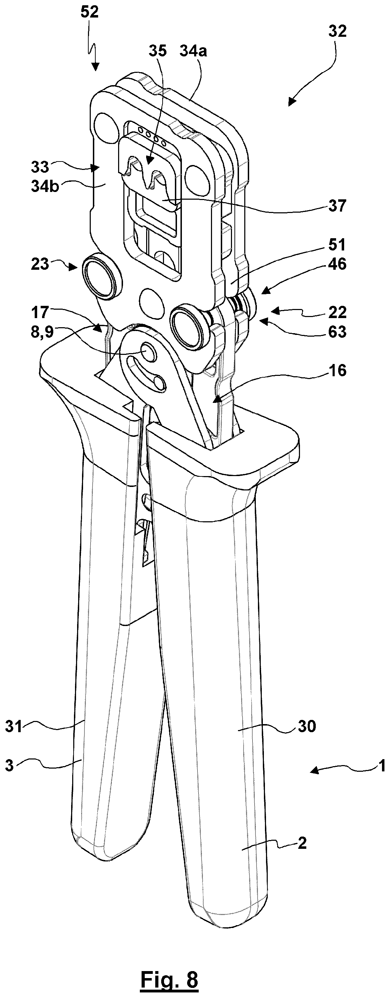

Wird eine durch die Montage der Crimpzangenbetätigungsbaugruppe 1 und des Crimpzangenkopfes 32 gebildete Crimpzange 52 gemäß Fig. 7 zum Vercrimpen eines Werkstücks verwendet, schließt der Bediener die Handhebel 2, 3, womit das Durchlaufen des Crimphubs herbeigeführt wird. **Fig. 8** zeigt die Crimpzange 52 am Ende des Crimphubes, an dem die Handhebel 2, 3 und die Gesenkhälften 35, 37 geschlossen sind.

In den Fig. 7 und 8 ist zu erkennen, dass in eine Richtung vertikal zur Zangenkopfebene in dem montierten Zustand die Rahmenplatten 34a, 34b jeweils zwischen den Grundkörpern 20, 21 und einer Erweiterung 28, 29 gefangen sind.

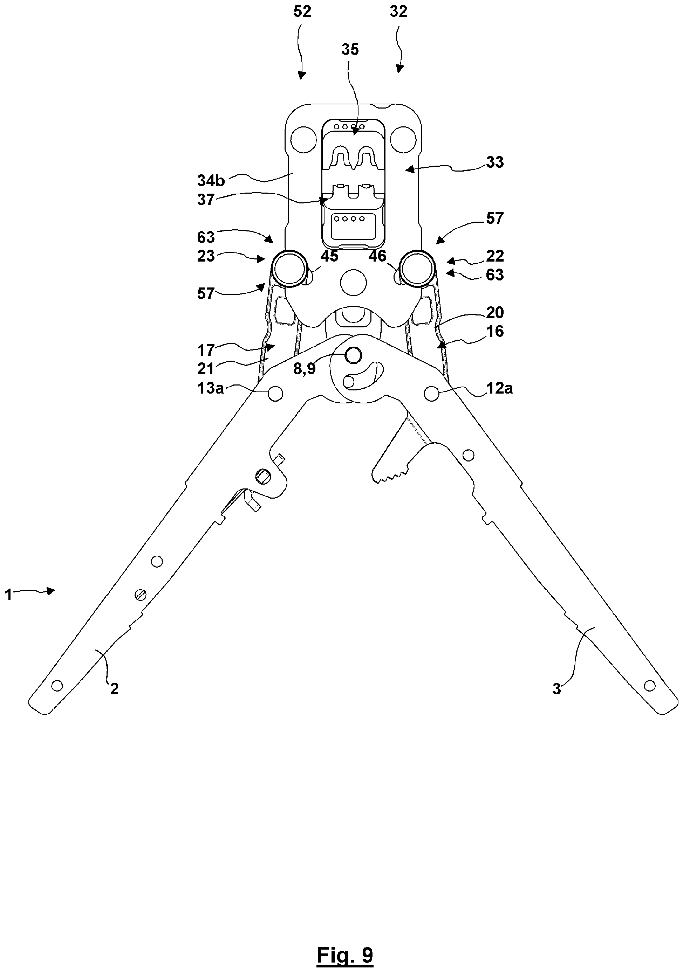

**Fig. 9** zeigt den teilmontierten Zustand der Crimpzange 52 zum Zeitpunkt der Eintritte der Kopplungselemente 22, 23 in die Kopplungsausnehmungen 45, 46, wobei hier einige Teile der Crimpzange 52 für die bessere Darstellung weggelassen sind.

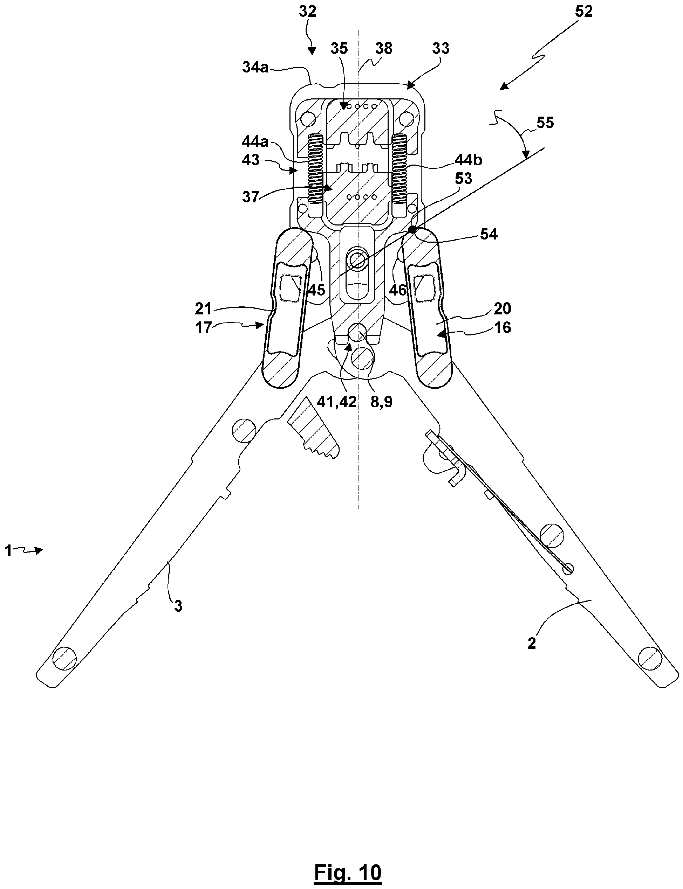

In einer entsprechenden Teilmontagestellung zeigt Fig. 10 die Crimpzange 52 in einer in der Ebene der Gesenke 35, 37 und in der Zangenkopfebene geschnittenen Darstellung, in der die Wechselwirkung des Schwenkbolzens 8 mit der Schwenkbolzen-Aufnahme 41 und die Anpressung infolge der Federn 44a, 44b zu erkennen ist.

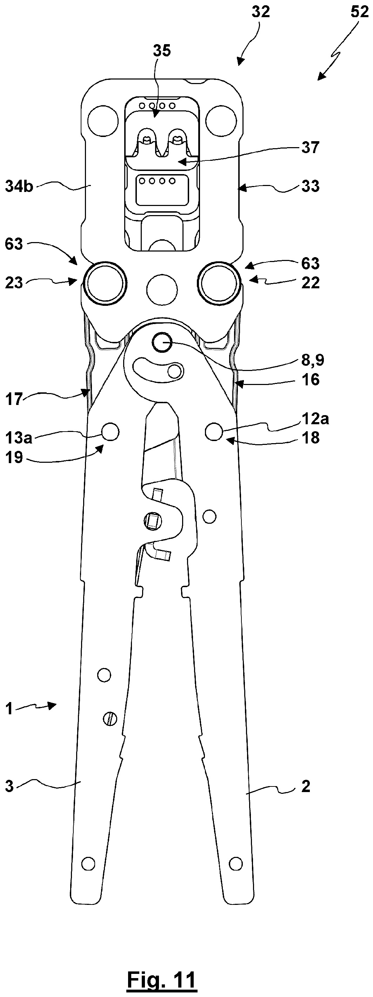

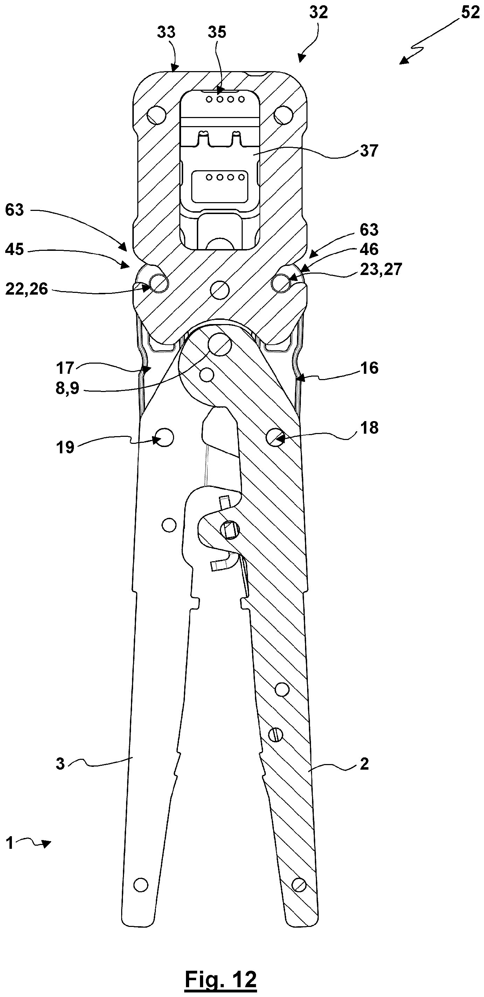

Schließlich zeigen **Fig. 11** **und** **12** den Fig. 9 und 10 entsprechende Darstellungen, wobei hier aber die Crimpzange 52 in der Schließstellung am Ende des Crimphubes dargestellt ist.

Als eine optionale Besonderheit kann bei dem Eintritt der Kopplungselemente 22, 23 in die Kopplungsausnehmungen 45, 46 oder auch bereits zuvor bei der Annäherung der Zuglaschen 16, 17 an den Zangenkopfrahmen 33 eine Kontaktfläche 53 der Zuglaschen 16, 17, 4 des Grundkörpers 20, 21, zu Anlage an eine Kontaktfläche 54 der beweglichen Gesenkhälfte 37 kommen (vgl. Fig. 10). Eine auf die Zuglaschen 16, 17 aufgebrachte Betätigungskraft, die die Zuglaschen 16, 17 nach innen schwenkt, wird durch die Kontaktflächen 53, 54 umgewandelt in eine Betätigungskraftkomponente, die eine Montagehilfskraft bereitstellt, welche bestrebt ist, die bewegliche Gesenkhälfte 37 in Schließrichtung zu bewegen und die Federn 44a, 44b zu komprimieren. Zu diesem Zweck sind die Kontaktflächen 53, 54 unter einem spitzen Winkel 55 gegenüber der Crimpachse 38 geneigt. Während der Einführbewegung gleiten die Kontaktflächen 53, 54 aneinander entlang. Die Kontaktflächen 53, 54 können auch beliebig gekrümmt sein, so dass sich ein während der Einführbewegung variierender Winkel 55 ergibt.

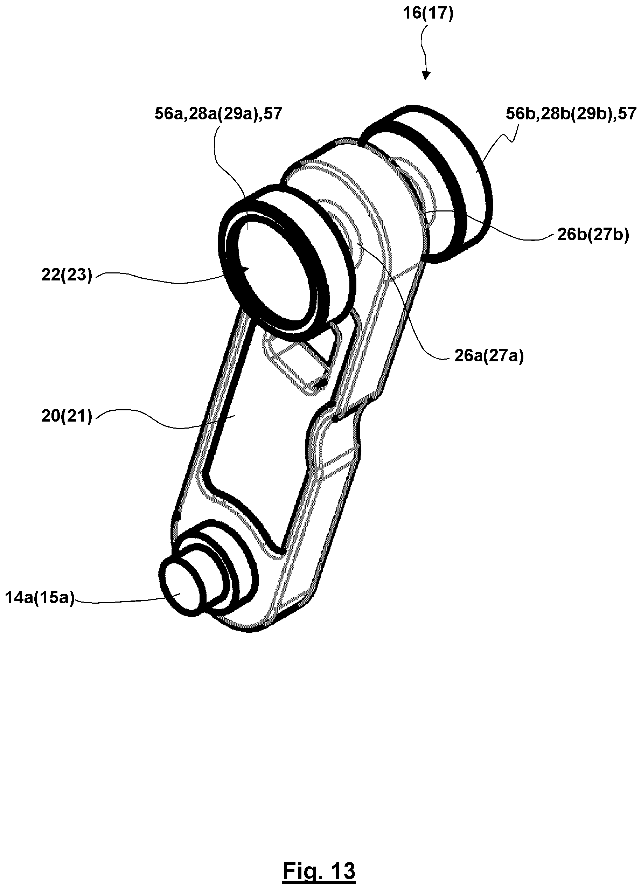

**Fig. 13** ist eine räumliche Einzelteilzeichnung einer Zuglasche 16, 17, die als ein integrales, einstückiges Bauelement den Grundkörper 20, 21, die Schwenkzapfen 14a, 14b, 15a, 15b und die Kopplungselemente 22, 23 ausbildet. Zu erkennen ist hier, dass die Erweiterungen 28, 29 als Tellerkörper 56 ausgebildet sind. Möglich ist, dass die Erweiterungen 28, 29 oder Tellerkörper 56 Betätigungselemente 57 bilden, welche die Montage und Demontage vereinfachen, indem auf diese für die Montage und Demontage und Bewegung der Zuglaschen 16, 17 erforderlichen Betätigungskräfte von dem Benutzer aufgebracht werden können.

Die Kopplungsausnehmungen 45, 46 können eine beliebige Formgebung aufweisen. Sie müssen nicht als Langloch 49 ausgebildet sein. Vielmehr ist entscheidend, dass die Kopplungsausnehmungen 45, 46 nach oben orientierte Haken oder Einhängösen ausbilden, in welche die Kopplungselemente 22, 23 eingehängt werden können.

Das Ausführungsbeispiel gemäß den Fig. 1 bis 13 stellt eine mögliche Ausführungsform der obigen "ersten Variante" dar.

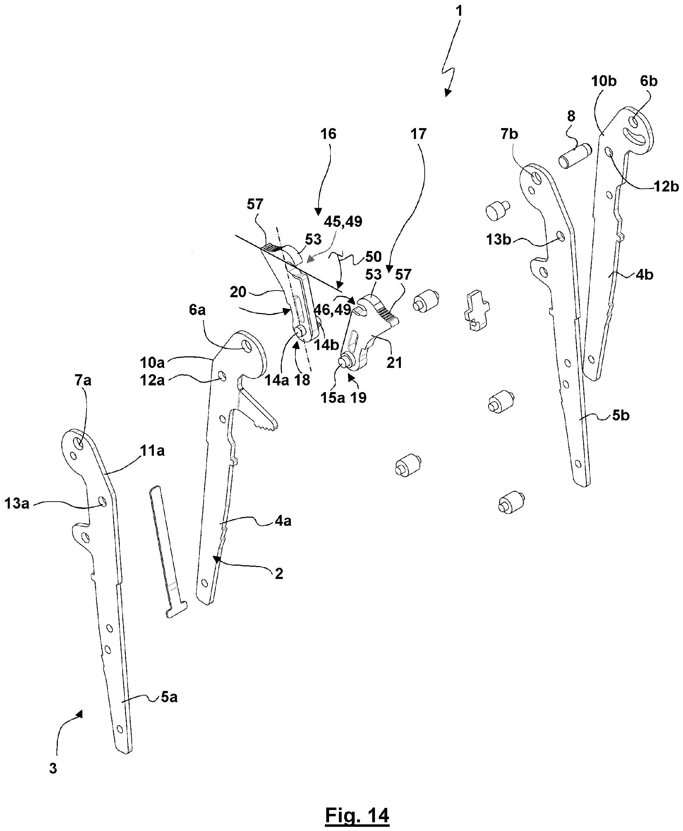

In den **Fig. 14 bis 21** ist ein weiteres Ausführungsbeispiel der Crimpzangenbetätigungsbaugruppe 1, des Crimpzangenkopfes 32 und der mit der Crimpzangenbetätigungsbaugruppe 1 und dem Crimpzangenkopf 32 gebildeten Crimpzange 52 dargestellt, das eine mögliche Ausführungsform der obigen "zweiten Variante" darstellt. Hierbei werden für konstruktiv oder funktional entsprechende oder ähnelnde Komponenten und Merkmale dieselben Bezugszeichen verwendet wie in Fig. 1 bis 13 und es wird auf die diesbezügliche Beschreibung verwiesen.

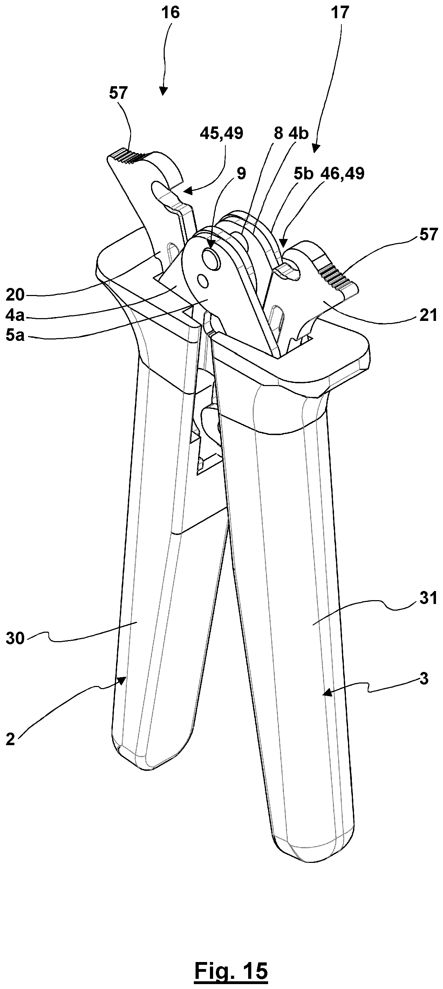

Die in Fig. 14 und 15 dargestellte Crimpzangenbetätigungsbaugruppe verfügt über Zuglaschen 16, 17, die nicht über Kopplungselemente 22, 23 in Form von Kopplungszapfen 26, 27 verfügen. Vielmehr sind für dieses Ausführungsbeispiel die Zuglaschen 16, 17 mit den Kopplungsausnehmungen 45, 46 ausgestattet, die hier als einseitig offenes Langloch 49 ausgebildet sind. In diesem Fall sind die Kopplungsausnehmungen 45, 46 unter einem spitzen Winkel 50, der vorzugsweise im Bereich von 30 ° bis 85 ° oder 40 ° bis 80 ° oder 50 ° bis 80 ° liegt, gegenüber einer radialen Richtung zu der Schwenkachse der Schwenklager 18, 19 durch den Boden der Kopplungsausnehmung 45, 46 geneigt. Wie zu erkennen ist, verfügt in diesem Fall der Grundkörper 20, 21 der Zuglaschen 16, 17 über seitliche Fortsätze, die die Betätigungselemente 57 bilden. Ansonsten ist die Crimpzangenbetätigungsbaugruppe 1 entsprechend der in Fig. 1 und 2 dargestellten und hierzu beschriebenen Crimpzangenbetätigungsbaugruppe ausgebildet.

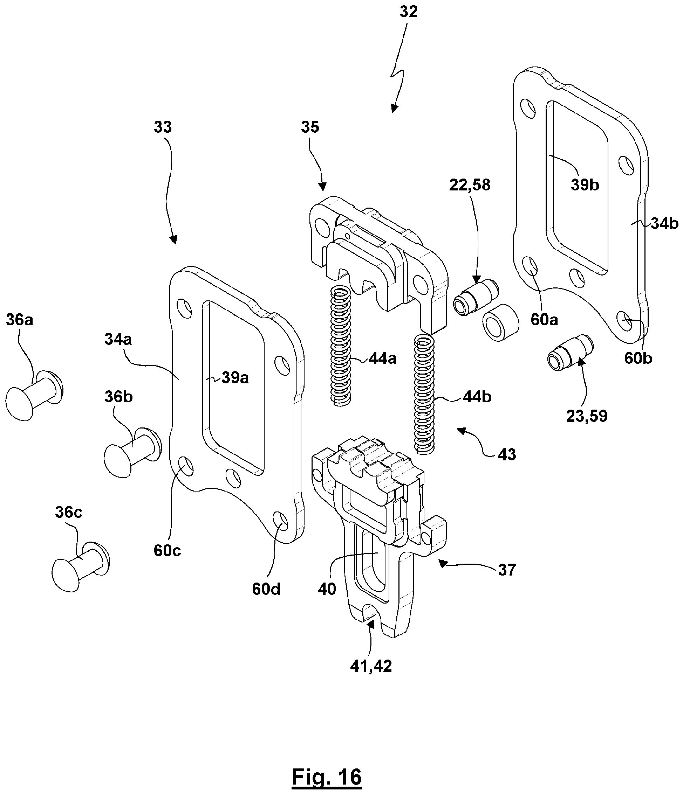

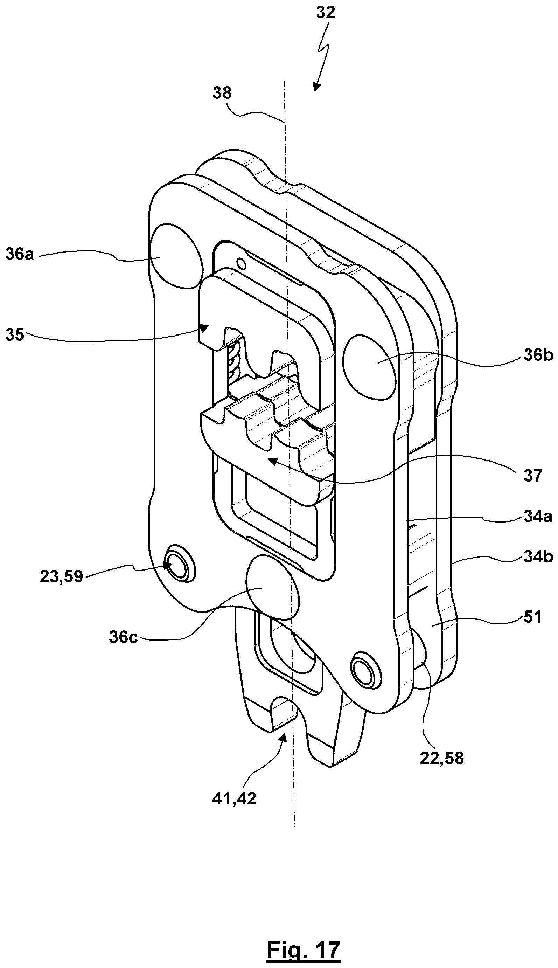

**Fig. 16** **und** **17** zeigen für dieses Ausführungsbeispiel den Crimpzangenkopf 32. Hier weist der Zangenkopfrahmen 33 keine Kopplungsausnehmungen 45, 46 auf. Vielmehr verfügt der Zangenkopfrahmen 33 in dem unteren Endbereich, der in dem montierten Zustand der Crimpzangenbetätigungsbaugruppe 1 zugewandt ist, über Kopplungselemente 22, 23, die als Kopplungsbolzen 58, 59 ausgebildet sind. Vorzugsweise sind die Kopplungsbolzen 58, 59 multifunktional, in dem diese einerseits als Kopplungselemente für die Kopplung mit der Crimpzangenbetätigungsbaugruppe 1 dienen und andererseits der Verbindung der Rahmenplatten 34a, 34b dienen. Für das dargestellte Ausführungsbeispiel sind die Kopplungsbolzen 58, 59 in den beiden Endbereichen abgestuft ausgebildet und finden passgenaue Aufnahme in entsprechenden Bohrungen 60a, 60b, 60c, 60d der Rahmenplatten 34a, 34b.

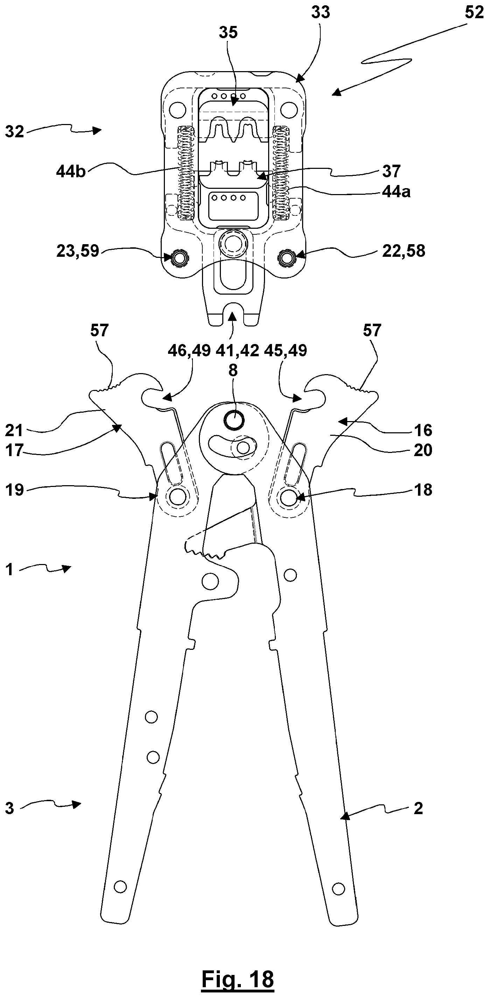

**Fig. 18 bis 21** zeigen die mit dem Crimpzangenkopf 32 und der Crimpzangenbetätigungsbaugruppe 1 gebildete Crimpzange 52 in unterschiedlichen Montagezuständen:
Gemäß Fig. 18 ist Crimpzangenkopf 32 von der Crimpzangenbetätigungsbaugruppe 1 demontiert. Die Schwenkbolzen-Aufnahme 41 des Crimpzangenkopfes 32 ist auf der Crimpzangenbetätigungsbaugruppe1 zugewandten Seite frei zugänglich. Auch der Schwenkbolzen 8 und die Zuglaschen 16, 17 der Crimpzangenbetätigungsbaugruppe 1 sind auf der dem Crimpzangenkopf 32 zugewandten Seite frei zugänglich, wobei die Zuglaschen 16, 17 frei in der Zangenkopfebene verschwenkt werden können.

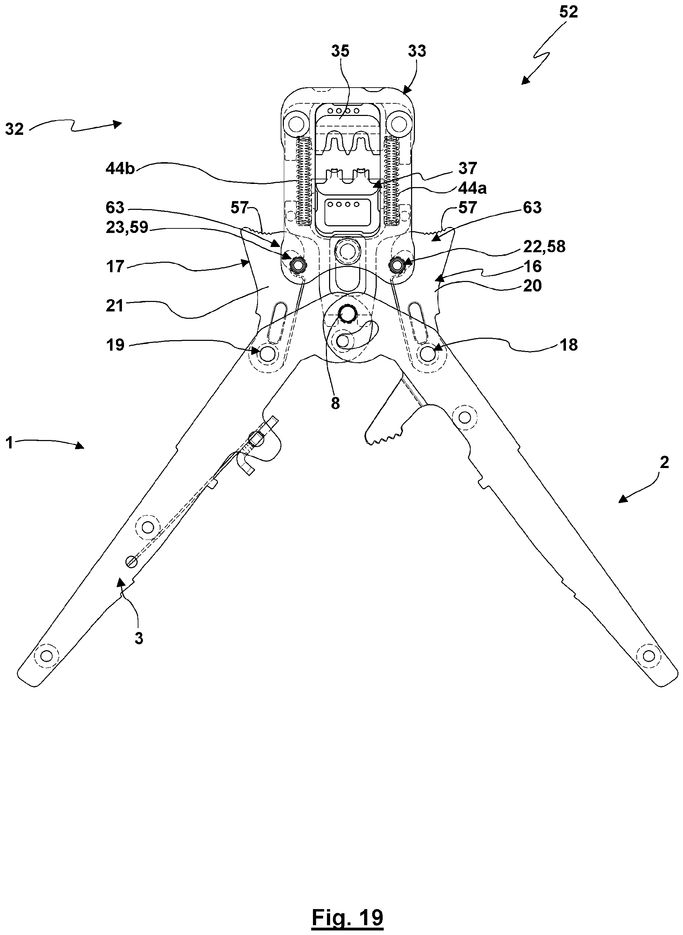

Gemäß Fig. 19 ist die Crimpzangenbetätigungsbaugruppe 2 so an den Crimpzangenkopf 32 angenähert worden, dass der Schwenkbolzen 8 eintritt in die Schwenkbolzen-Aufnahme 41 und an dem Boden der Schwenkbolzen-Aufnahme 41 zu Anlage kommt. Darüber hinaus sind die Zuglaschen 16, 17 nach innen verschwenkt, womit die Kopplungsbolzen 58, 59 des Crimpzangenkopfes 32 eintreten in die Kopplungsausnehmungen 45, 46 der Zuglaschen 16, 17. Die Länge der Zuglaschen 16, 17 ist dabei derart bemessen, dass dieser Eintritt nur möglich ist, wenn sich die bewegliche Gesenkhälfte 37 in Schließrichtung bewegt unter Beaufschlagung der Federeinrichtung 43. Hinsichtlich des Ausmaßes der Schließbewegung und der hierbei auftretenden Kraftverhältnisse gilt das zu dem ersten Ausführungsbeispiel Gesagte entsprechend.

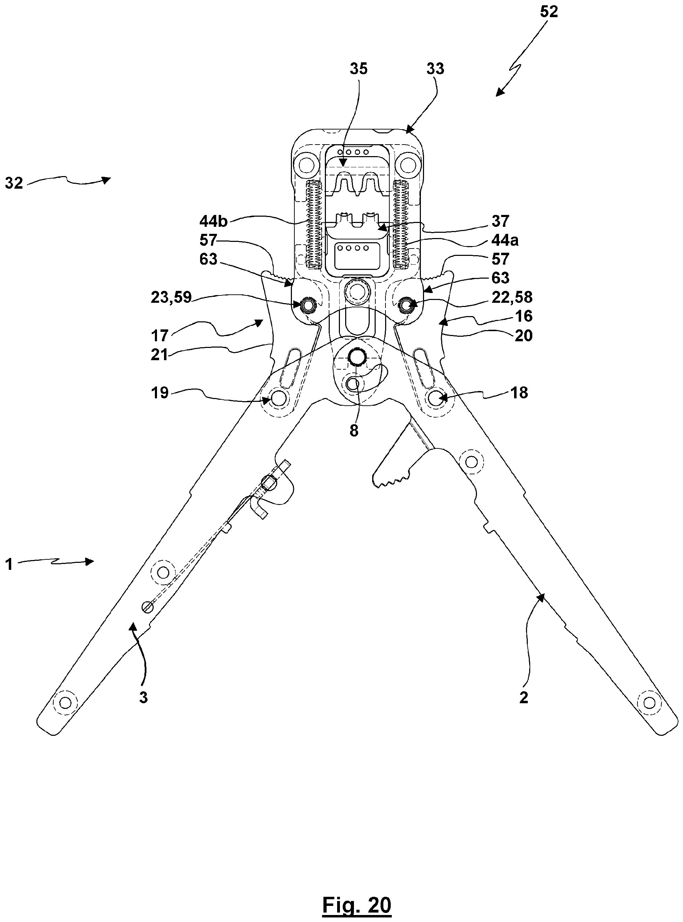

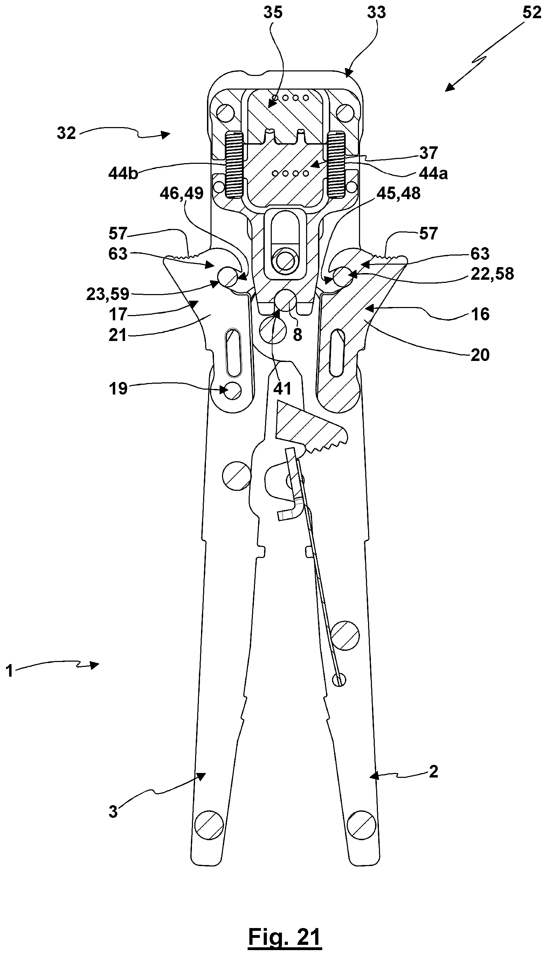

Liegen die Kopplungsbolzen 58, 59 in der vollständig montierten Stellung gemäß Fig. 20 an dem Boden der Kopplungsausnehmungen 45, 46 an, sichert die Federeinrichtung 43 die derart montierte Stellung. Die Verschwenkung der Handhebel 2, 3 aufeinander zu führt dann zu dem Durchlaufen des Crimphubes, bis die in Fig. 21 dargestellte Schließstellung erreicht ist.

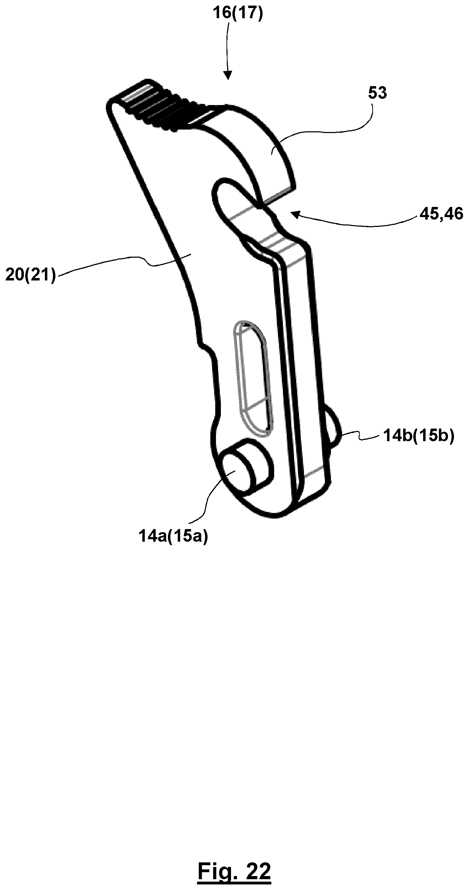

**Fig. 22** zeigt die Zuglaschen 16, 17 als Einzelteil. Die Zuglaschen 16, 17 sind vorzugsweise einstückig ausgebildet mit dem Grundkörper 20, 21 und den Schwenkzapfen 14, 15 sowie dem Betätigungselement 57. Vorzugsweise sind die Zuglaschen 16, 17 in einem MIN-Herstellungsverfahren hergestellt.

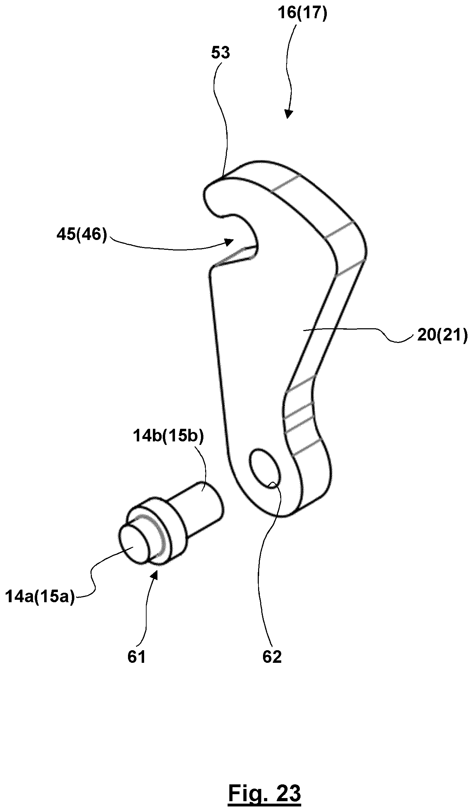

**Fig. 23** zeigt eine alternative Ausgestaltung der Zuglaschen 16, 17, bei denen Grundkörper 20, 21 und ein Schwenkbolzen 61, der die Schwenkzapfen 14, 15 bildet, separat voneinander ausgebildet sind. In diesem Fall kann der Grundkörper 20, 21 beispielsweise als Fräs- oder Stanzteil hergestellt sein. Der Grundkörper 20, 21 verfügt dann über eine Bohrung 62, in welcher der Schwenkbolzen 61 passgenaue Aufnahme, beispielsweise über eine Presspassung, findet.

Auch für dieses Ausführungsbeispiel können die Zuglaschen 16, 17 eine Kontaktfläche 53 aufweisen, die bei dem Hereinschwenken der Zuglaschen 16, 17 zu Anlage kommt an eine Kontaktfläche 54 der beweglichen Gesenkhälfte 53. Durch die Kontaktfläche kann eine Betätigungskraftkomponente erzeugt werden, welche eine Bewegung der beweglichen Gesenkhälfte 37 in Schließrichtung hervorruft, um den Eintritt der Kopplungsbolzen 58, 59 in die Kopplungsausnehmungen 45, 46 zu ermöglichen.

Die Kopplungsausnehmungen 45, 46 und die Kopplungselemente 22, 23 bilden Kopplungseinrichtungen 63, über die der Crimpzangenkopf 32 mit der Crimpzangenbetätigungsbaugruppe 1 (insbesondere ohne Verwendung eines Werkzeugs) montiert und hiervon demontiert werden kann.

### BEZUGSZEICHENLISTE

- 1: Crimpzangenbetätigungsbaugruppe
- 2: Handhebel
- 3: Handhebel
- 4: Handhebelplatte
- 5: Handhebelplatte
- 6: Bohrung
- 7: Bohrung
- 8: Schwenkbolzen
- 9: Schwenklager
- 10: Kröpfung
- 11: Kröpfung
- 12: Bohrung
- 13: Bohrung
- 14: Schwenkzapfen
- 15: Schwenkzapfen
- 16: Zuglasche
- 17: Zuglasche
- 18: Schwenklager
- 19: Schwenklager
- 20: Grundkörper
- 21: Grundkörper
- 22: Kopplungselement
- 23: Kopplungselement
- 24: Kopplungselementteil
- 25: Kopplungselementteil
- 26: Kopplungszapfen
- 27: Kopplungszapfen
- 28: Erweiterung
- 29: Erweiterung
- 30: Griff
- 31: Griff
- 32: Crimpzangenkopf
- 33: Zangenkopfrahmen
- 34: Rahmenplatte
- 35: feste Gesenkhälfte
- 36: Niet
- 37: bewegliche Gesenkhälfte
- 38: Crimpachse
- 39: Ausnehmung
- 40: Ausnehmung
- 41: Schwenkbolzen-Aufnahme
- 42: Ausnehmung
- 43: Federeinrichtung
- 44: Feder
- 45: Kopplungsausnehmung
- 46: Kopplungsausnehmung
- 47: Kopplungsausnehmungsteil
- 48: Kopplungsausnehmungsteil
- 49: Langloch
- 50: spitzer Winkel
- 51: Zwischenraum
- 52: Crimpzange
- 53: Kontaktfläche
- 54: Kontaktfläche
- 55: spitzer Winkel
- 56: Tellerkörper
- 57: Betätigungselement
- 58: Kopplungsbolzen
- 59: Kopplungsbolzen
- 60: Bohrung
- 61: Schwenkbolzen
- 62: Bohrung
- 63: Kopplungseinrichtung
- 64: Hülse

## Patentansprüche

1. Crimpzange (52) mit
a) zwei Handhebeln (2, 3),
b) einem Schwenkbolzen (8), über den die Handhebel (2, 3) verschwenkbar miteinander verbunden sind,
c) zwei Zuglaschen (16, 17), die beabstandet von dem Schwenkbolzen (8) an den Handhebeln (2, 3) angelenkt sind,
d) einem Crimpzangenkopf (32) mit
da) einem Zangenkopfrahmen (33),
db) einer Federeinrichtung (43) und
dc) einer Gesenkhälfte (37), die
- verschieblich in Richtung einer Crimpachse (38) an dem Zangenkopfrahmen (33) geführt ist,
- über die Federeinrichtung (43) derart an dem Zangenkopfrahmen (33) abgestützt ist, dass die Federeinrichtung (43) die Gesenkhälfte (37) in eine Öffnungsrichtung beaufschlagt, und
- eine einseitig offene Schwenkbolzen-Aufnahme (41) aufweist,
e) wobei die Zuglaschen (16, 17) über Kopplungseinrichtungen (63) mit dem Zangenkopfrahmen (33) verbunden sind, der Schwenkbolzen (8) in der Schwenkbolzen-Aufnahme (41) angeordnet ist, eine Verschwenkung der Handhebel (2, 3) eine Relativbewegung der Gesenkhälfte (37) gegenüber dem Zangenkopfrahmen (33) hervorruft und eine Bewegung der Gesenkhälfte (37) und eine Verschwenkung der Handhebel (2, 3) in einer Zangenkopfebene erfolgen,
**dadurch gekennzeichnet, dass**
f) mindestens eine Kopplungseinrichtung (63), vorzugsweise beide Kopplungseinrichtungen, eine einseitig offene Kopplungsausnehmung (45; 46) und ein Kopplungselement (22; 23) aufweist/aufweisen, wobei die Kopplung zwischen der Kopplungsausnehmung (45; 46) und dem Kopplungselement (22; 23)
fa) mittels einer Verschwenkung der Zuglasche (16, 17) in der Zangenkopfebene und einem durch diese Verschwenkung herbeigeführten Eintritt des Kopplungselements (22; 23) in die Kopplungsausnehmung (45; 46) herbeiführbar ist und
fb) durch die Federeinrichtung (43) gesichert ist.

2. Crimpzange (52) nach Anspruch 1, **dadurch gekennzeichnet, dass** die Kopplungsausnehmungen (45; 46) Eintrittsrichtungen der Kopplungselemente (22; 23) in die Kopplungsausnehmungen (45; 46) vorgeben, welche unter einem spitzen Winkel (50) gegenüber der Crimpachse (38) geneigt sind.

3. Crimpzange (52) nach Anspruch 1 oder 2, **dadurch gekennzeichnet, dass**
a) die Kopplungsausnehmungen (45; 46) von dem Zangenkopfrahmen (33) ausgebildet sind und/oder
b) die Kopplungselemente (22; 23) Kopplungsbolzen (58; 59), Kopplungszapfen (26; 27) oder Kopplungsfortsätze der Zuglaschen (16; 17) sind.

4. Crimpzange (52) nach Anspruch 3, **dadurch gekennzeichnet, dass**
a) der Zangenkopfrahmen (33) zwei sich parallel erstreckende Rahmenplatten (34a, 34b) aufweist, die jeweils eine Kopplungsteilausnehmung (47a, 47b, 48a, 48b) aufweisen, und
b) eine Zuglasche (16; 17) einen Grundkörper (20; 21) und auf beiden Seiten von dem Grundkörper (20; 21) angeordnete fluchtende Kopplungsbolzen, Kopplungszapfen (26a, 26b, 27a, 27b) oder Kopplungsfortsätze aufweist,
c) wobei sich der Grundkörper (20; 21) in einen Zwischenraum (51) zwischen den Rahmenplatten (34a, 34b) erstreckt und die Kopplungsbolzen, Kopplungszapfen (26a, 26b, 27a, 27b) oder Kopplungsfortsätze in den Kopplungsteilausnehmungen (47a, 47b, 48a, 48b) angeordnet sind.

5. Crimpzange (52) nach Anspruch 4, **dadurch gekennzeichnet, dass** der Grundkörper (20; 21) und die Kopplungsbolzen, Kopplungszapfen (26a, 26b, 27a, 27b) oder Kopplungsfortsätze einstückige Zuglaschen (16; 17) bilden, die insbesondere in einem MIM-Herstellungsverfahren hergestellt sind

6. Crimpzange (52) nach Anspruch 4 oder 5, **dadurch gekennzeichnet, dass** Kopplungsbolzen, Kopplungszapfen (26a, 26b, 27a, 27b) oder Kopplungsfortsätze eine endseitige Erweiterung (28a, 28b, 29a, 29b) aufweisen und die Rahmenplatten (34a, 34b) in eine Richtung vertikal zur Zangenkopfebene jeweils zwischen einer Erweiterung (28a, 28b, 29a, 29b) und dem Grundkörper (20; 21) gefangen sind.

7. Crimpzange (52) nach Anspruch 1 oder 2, **dadurch gekennzeichnet, dass**
a) die Kopplungsausnehmungen (45; 46) von den Zuglaschen (16; 17) ausgebildet sind und/oder
b) die Kopplungselemente (22; 23) Kopplungsbolzen (58; 59), Kopplungszapfen oder Kopplungsfortsätze sind, die von dem Zangenkopfrahmen (33) ausgebildet sind oder von dem Zangenkopfrahmen (33) getragen sind.

8. Crimpzange (52) nach Anspruch 7, **dadurch gekennzeichnet, dass**
a) der Zangenkopfrahmen (33) zwei sich parallel erstreckende Rahmenplatten (34a, 34b) aufweist, die über einen Kopplungsbolzen (58; 59) miteinander verbunden sind, und
b) eine Zuglasche (16; 17) einen Grundkörper (20; 21) aufweist, der die Kopplungsausnehmungen (45; 46) ausbildet und sich in einen Zwischenraum (51) zwischen den Rahmenplatten (34a, 34b) erstreckt,
c) wobei der die Rahmenplatten (34a, 34b) verbindende Kopplungsbolzen (58; 59) in den Kopplungsteilausnehmungen (47; 48) angeordnet ist.

9. Crimpzange (52) nach einem der vorhergehenden Ansprüche, **dadurch gekennzeichnet, dass** die Zuglaschen (16; 17) seitlich oder horizontal aus dem Zangenkopfrahmen (33) herausstehende Betätigungselemente (57) aufweisen.

10. Crimpzange (52) nach einem der vorhergehenden Ansprüche, **dadurch gekennzeichnet, dass** die Zuglaschen (16; 17) und die bewegliche Gesenkhälfte (37) Kontaktflächen (53, 54) aufweisen, die auf die Zuglaschen (16; 17) aufgebrachte Montagekräfte in eine Kraftkomponente umwandeln, die eine Erhöhung der Beaufschlagung der Federeinrichtung (43) und eine Bewegung der beweglichen Gesenkhälfte (37) in Schließrichtung zur Folge haben.

11. Crimpzange (52) nach einem der vorhergehenden Ansprüche, **dadurch gekennzeichnet, dass** die Zuglaschen (16) in den dem Crimpzangenkopf (32) abgewandten Endbereichen Fortsätze oder Schwenkzapfen (14, 15) aufweisen, die in Bohrungen (12, 13) von parallelen Handhebelplatten (4; 5) der Handhebel (2, 3) drehbar aufgenommen sind.

12. Crimpzangenkopf (32) für eine Crimpzange (52) nach einem der Ansprüche 3 bis 6 und 10 oder 11 mit einem Zangenkopfrahmen (33) mit Kopplungseinrichtungen (63), über die der Crimpzangenkopf (32) mit einer Crimpzangenbetätigungsbaugruppe (1) koppelbar ist, **dadurch gekennzeichnet, dass** die Kopplungseinrichtungen (63) als einseitig offene Kopplungsausnehmungen (45, 46) ausgebildet sind.

13. Crimpzangenbetätigungsbaugruppe (1) für eine Crimpzange nach einem der Ansprüche 7 bis 11 mit
a) zwei Handhebeln (2, 3),
b) einem Schwenkbolzen (8), über den die Handhebel (2, 3) verschwenkbar miteinander verbunden sind, und
c) zwei Zuglaschen (16, 17), die beabstandet von dem Schwenkbolzen (8) an den Handhebeln (2, 3) angelenkt sind und Kopplungseinrichtungen (63) aufweisen, über die die Crimpzangenbetätigungsbaugruppe (1) mit einem Crimpzangenkopf (32) koppelbar ist,
**dadurch gekennzeichnet, dass**
d) die Zuglaschen (16; 17) einseitig offene Kopplungsausnehmungen (45, 46) aufweisen.

14. Verfahren zur Montage einer Crimpzange (52) mit
a) zwei Handhebeln (2, 3),
b) einem Schwenkbolzen (8), über den die Handhebel (2, 3) verschwenkbar miteinander verbunden sind,
c) zwei Zuglaschen (16, 17), die beabstandet von dem Schwenkbolzen (8) an den Handhebeln (2, 3) angelenkt sind,
d) einem Crimpzangenkopf (32) mit
da) einem Zangenkopfrahmen (33),
db) einer Federeinrichtung (43) und
dc) einer Gesenkhälfte (37), die
- verschieblich in Richtung einer Crimpachse (38) an dem Zangenkopfrahmen (33) geführt ist,
- über die Federeinrichtung (43) derart an dem Zangenkopfrahmen (33) abgestützt ist, dass die Federeinrichtung (43) die Gesenkhälfte (37) in eine Öffnungsrichtung beaufschlagt, und
- eine einseitig offene Schwenkbolzen-Aufnahme (41) aufweist,
e) wobei die Zuglaschen (16; 17) über eine Kopplungseinrichtung (63) mit dem Zangenkopfrahmen (33) verbunden sind, der Schwenkbolzen (8) in der Schwenkbolzen-Aufnahme (41) angeordnet ist und eine Verschwenkung der Handhebel (2, 3) in eine Schließrichtung eine Relativbewegung der Gesenkhälfte (37) gegenüber dem Zangenkopfrahmen (33) in Schließrichtung hervorruft und
f) die Kopplungseinrichtungen (63) jeweils eine einseitig offene Kopplungsausnehmung (45, 46) und ein Kopplungselement (22, 23) aufweisen, wobei das Kopplungselement (22, 23) in die Kopplungsausnehmung (45, 46) eingeführt ist und durch die Federeinrichtung (43) gegenüber einem Austritt aus der Kopplungsausnehmung (45, 46) gesichert ist. insbesondere einer Crimpzange (52) nach einem der Ansprüche 2 bis 11,
mit den folgenden Verfahrensschritten:
a) Einführen des Schwenkbolzens (8) in die Schwenkbolzen-Aufnahme (41) der Gesenkhälfte (37) und
b) Verbinden der Zuglaschen (16, 17) mit dem Crimpzangenkopf (32) durch Eintritt der Kopplungselemente (22, 23) in die Kopplungsausnehmungen (45, 46) bei gleichzeitiger Komprimierung der Federeinrichtung (43) derart, dass infolge der Beaufschlagung durch die Federeinrichtung (43) die Kopplungselemente (22, 23) gegenüber einem Austritt aus den Kopplungsausnehmungen (45, 46) gesichert sind.

## Claims

1. Crimping pliers (52) comprising
a) two hand levers (2, 3),
b) a pivot bolt (8) via which the hand levers (2, 3) are pivotably connected to one another,
c) two pulling bars (16, 17) linked to the hand levers (2, 3) at a distance from the pivot bolt (8),
d) a crimping pliers head (32) with
da) a pliers head frame (33),
db) a spring device (43) and
dc) a die half (37), which
- is guided displaceably in the direction of a crimping axis (38) on the pliers head frame (33),
- is supported by the spring device (43) on the pliers head frame (33) in such a way that the spring device (43) biases the die half (37) in an opening direction, and
- has a pivot bolt accommodation (41) which is open on one side,
e) the pulling bars (16, 17) being connected to the pliers head frame (33) via coupling devices (63), the pivot bolt (8) being arranged in the pivot bolt accommodation (41), a pivoting of the hand levers (2, 3) causing a relative movement of the die half (37) with respect to the pliers head frame (33), and a movement of the die half (37) and a pivoting of the hand levers (2, 3) taking place in a pliers head plane,
**characterized in that**
f) at least one coupling device (63), preferably both coupling devices, has/have a coupling recess (45; 46) open on one side and a coupling element (22; 23), wherein the coupling between the coupling recess (45; 46) and the coupling element (22; 23)
fa) can be established by means of a pivoting movement of the pulling bar (16, 17) in the pliers head plane and by means of an entry of the coupling element (22; 23) into the coupling recess (45; 46) brought about by this pivoting movement, and
fb) is secured by the spring device (43).

2. Crimping pliers (52) of claim 1, **characterized in that** the coupling recesses (45; 46) define entry directions of the coupling elements (22; 23) into the coupling recesses (45; 46), the entry directions being inclined at an acute angle (50) with respect to the crimping axis (38).

3. Crimping pliers (52) of claim 1 or 2, **characterized in that**
a) the coupling recesses (45; 46) are formed by the pliers head frame (33) and/or
b) the coupling elements (22; 23) are coupling bolts (58; 59), coupling pins (26; 27) or coupling protrusions of the pulling bars (16; 17).

4. Crimping pliers (52) of claim 3, **characterized in that**
a) the pliers head frame (33) comprises two frame plates (34a, 34b) extending parallel to each other and each having a coupling part recess (47a, 47b, 48a, 48b), and
b) a pulling bar (16; 17) has a base body (20; 21) and aligned coupling bolts, coupling pins (26a, 26b, 27a, 27b) or coupling protrusions arranged on both sides of the base body (20; 21),
c) the base body (20; 21) extending into an interspace (51) between the frame plates (34a, 34b) and the coupling bolts, coupling pins (26a, 26b, 27a, 27b) or coupling protrusions being arranged in the coupling part recesses (47a, 47b, 48a, 48b).

5. Crimping pliers (52) of claim 4, **characterized in that** the base body (20; 21) and the coupling bolts, coupling pins (26a, 26b, 27a, 27b) or coupling protrusions form one-piece pulling bars (16; 17), which are in particular produced in a MIM manufacturing process.

6. Crimping pliers (52) of claim 4 or 5, **characterized in that** coupling bolts, coupling pins (26a, 26b, 27a, 27b) or coupling protrusions comprise an end-sided extensions (28a, 28b, 29a, 29b) and the frame plates (34a, 34b) are each trapped in a direction vertical to the pliers head plane between one extension (28a, 28b, 29a, 29b) and the base body (20; 21).

7. Crimping pliers (52) of claim 1 or 2, **characterized in that**
a) the coupling recesses (45; 46) are formed by the pulling bars (16; 17) and/or
b) the coupling elements (22; 23) are coupling bolts (58; 59), coupling pins or coupling protrusions formed by the pliers head frame (33) or supported by the pliers head frame (33).

8. Crimping pliers (52) of claim 7, **characterized in that**
a) the pliers head frame (33) comprises two frame plates (34a, 34b) extending parallel to each other and connected to each other via a coupling bolt (58; 59), and
b) a pulling bar (16; 17) has a base body (20; 21) which forms the coupling recesses (45; 46) and extends into an interspace (51) between the frame plates (34a, 34b),
c) the coupling bolt (58; 59) connecting the frame plates (34a, 34b) being arranged in the coupling part recesses (47; 48).

9. Crimping pliers (52) of one of the preceding claims, **characterized in that** the pulling bars (16; 17) comprise actuating elements (57) protruding laterally or horizontally out of the pliers head frame (33).

10. Crimping pliers (52) of one of the preceding claims, **characterized in that** the pulling bars (16; 17) and the movable die half (37) comprise contact surfaces (53, 54) which convert assembly forces applied to the pulling bars (16; 17) into a force component which results in an increase of the bias of the spring device (43) and a movement of the movable die half (37) in the closing direction.

11. Crimping pliers (52) of one of the preceding claims, **characterized in that** in the end regions facing away from the crimping pliers head (32) the pulling bars (16) comprise protrusions or pivot pins (14, 15) which are rotatably accommodated in bores (12, 13) of parallel hand levers plates (4; 5) of the hand levers (2, 3).

12. Crimping pliers head (32) for crimping pliers (52) according to one of claims 3 to 6 and 10 or 11 with a pliers head frame (33) with coupling devices (63), by which the crimping pliers head (32) can be coupled to a crimping pliers actuation assembly (1), **characterized in that** the coupling devices (63) are designed as coupling recesses (45, 46) being open on one side.

13. Crimping pliers actuator assembly group (1) for crimping pliers according to one of claims 7 to 11, comprising
a) two hand levers (2, 3),
b) a pivot bolt (8), by which the hand levers (2, 3) are pivotably connected to each other, and
c) two pulling bars (16, 17) linked to the hand levers (2, 3) at a distance from the pivot bolt (8) and comprising coupling means (63) by which the crimping pliers actuating assembly group (1) can be coupled to a crimping pliers head (32),
**characterized in that**
d) the pulling bars (16; 17) comprise coupling recesses (45, 46) being open on one side.

14. Method for assembling crimping pliers (52) with
a) two hand levers (2, 3),
b) a pivot bolt (8) by which the hand levers (2, 3) are pivotably connected to each other.
c) two pulling bars (16, 17) linked to the hand levers (2, 3) at a distance from the pivot bolt (8),
d) a crimping pliers head (32) with
da) a pliers head frame (33),
db) a spring device (43) and
dc) a die half (37), which
- is guided displaceably in the direction of a crimping axis (38) on the pliers head frame (33),
- is supported by the spring means (43) on the pliers head frame (33) in such a way that the spring device (43) biases the die half (37) in an opening direction, and
- comprises a pivot bolt accommodation (41) being open on one side,
e) the pulling bars (16; 17) being connected to the pliers head frame (33) via a coupling device (63), the pivot bolt (8) being arranged in the pivot bolt accommodation (41) and a pivoting of the hand levers (2, 3) in a closing direction causing a relative movement of the die half (37) with respect to the pliers head frame (33) in closing direction and
f) the coupling devices (63) each comprising a coupling recess (45, 46) being open on one side and a coupling element (22, 23), the coupling element (22, 23) being inserted into the coupling recess (45, 46) and being secured by the spring device (43) against exiting from the coupling recess (45, 46),
in particular crimping pliers (52) of one of claims 2 to 11,
with the following method steps:
a) inserting the pivot bolt (8) into the pivot bolt accommodation (41) of the die half (37) and
b) connecting the pulling bars (16, 17) to the crimping pliers head (32) by entering of the coupling elements (22, 23) into the coupling recesses (45, 46) with simultaneous compression of the spring device (43) in such a way that as a result of the bias by the spring device (43) the coupling elements (22, 23) are secured against exiting from the coupling recesses (45, 46).

## Revendications

1. Pince de sertissage (52) avec
a) deux leviers (2, 3),
b) une tige de pivotement (8) par l'intermédiaire de laquelle les leviers (2, 3) sont reliés entre eux de manière pivotante,
c) deux pattes de traction (16, 17) qui sont articulées au niveau des leviers (2, 3) à une certaine distance des tiges de pivotement (8),
d) une tête de pince de sertissage (32) avec
da) un cadre de tête de pince (33),
db) un dispositif à ressort (43) et
dc) une moitié de matrice (37) qui
- est guidée de manière coulissante dans la direction d'un axe de sertissage (38) au niveau du cadre de tête de pince (33)
- est appuyée, par l'intermédiaire du dispositif à ressort (43), contre le cadre de tête de pince (33), de sorte que le dispositif à ressort (43) contraint la moitié de matrice (37) dans une direction d'ouverture et
- comprend un logement de tige de pivotement (41) ouvert d'un côté,
e) dans laquelle les pattes de traction (16, 17) sont reliées par l'intermédiaire de dispositifs de couplage (63) avec le cadre de tête de pince (33), la tige de pivotement (8) est disposée dans le logement de tige de pivotement (41), un pivotement des leviers (2, 3) provoque un mouvement relatif de la moitié de matrice (37) par rapport au cadre de tête de pince (33) et un mouvement de la moitié de matrice (37) et un pivotement des leviers (2, 3) ont lieu dans un plan de tête de pince,
**caractérisée en ce que**
f) au moins un dispositif de couplage (63), de préférence les deux dispositifs de couplage, présente un évidement de couplage (45 ; 46) ouvert d'un côté et un élément de couplage (22 ; 23), dans laquelle le couplage entre l'évidement de couplage (45 ; 46) et l'élément de couplage (22 ; 23)
fa) peut être effectué au moyen d'un pivotement de la patte de traction (16, 17) dans le plan de la tête de pince et d'une entrée, provoquée par ce pivotement, de l'élément de couplage (22 ; 23) dans l'évidement de couplage (45 ; 46) et
fb) est sécurisé par le dispositif à ressort (43).

2. Pince de sertissage (52) selon la revendication 1, **caractérisée en ce que** les évidements de couplage (45 ; 46) imposent des directions d'entrée des éléments de couplage (22 ; 23) dans les évidements de couplage (45 ; 46), qui sont inclinées avec un angle aigu (50) par rapport à l'axe de sertissage (38).

3. Pince de sertissage (52) selon la revendication 1 ou 2, **caractérisée en ce que**
a) les évidements de couplage (45 ; 46) sont formés par le cadre de tête de pince (33) et/ou
b) les éléments de couplage (22 ; 23) sont des tiges de couplage (58 ; 59), des tenons de couplage (26 ; 27) ou des saillies de couplage des pattes de traction (16 ; 17).

4. Pince de sertissage (52) selon la revendication 3, **caractérisée en ce que**
a) le cadre de tête de pince (33) présente deux plaques de cadre (34a, 34b) s'étendant parallèlement, qui présentent chacune un évidement partiel de couplage (47a, 47b, 48a, 48b) et
b) une patte de traction (16 ; 17) présente un corps de base (20 ; 21) et des tiges de couplages, des tenons de couplage (26a, 26b, 27a, 27b) ou des saillies de couplage alignés disposés des deux côtés du corps de base (20 ; 21),
c) dans laquelle le corps de base (20 ; 21) s'étend dans un espace intercalaire (51) entre les plaques de cadre (34a, 34b) et les tiges de couplages, tenons de couplage (26a, 26b, 27a, 27b) et saillies de couplage sont disposés dans les évidements partiels de couplage (47a, 47b, 48a, 48b).

5. Pince de sertissage (52) selon la revendication 4, **caractérisée en ce que** le corps de base (20 ; 21) et les tiges de couplages, tenons de couplage (26a, 26b, 27a, 27b) ou saillies de couplage forment des pattes de traction (16 ; 17) d'une seule pièce, qui sont fabriquées plus particulièrement à l'aide d'un procédé de fabrication MIM.

6. Pince de sertissage (52) selon la revendication 4 ou 5, **caractérisée en ce que** les tiges de couplages, tenons de couplage (26a, 26b, 27a, 27b) ou saillies de couplage présentent un élargissement (28a, 28b, 29a, 29b) au niveau de leur extrémité et les plaques de cadre (34a, 34b) sont coincés dans une direction verticale par rapport au plan de la tête de pince respectivement entre un élargissement (28a, 28b, 29a, 29b) et le corps de base (20 ; 21).

7. Pince de sertissage (52) selon la revendication 1 ou 2, **caractérisée en ce que**
a) les évidements de couplage (45 ; 46) sont formés par les pattes de traction (16 ; 17) et/ou
b) les éléments de couplage (22 ; 23) sont des tiges de couplage (58 ; 59), des tenons de couplage ou des saillies de couplage qui sont formés par le cadre de tête de pince (33) ou qui sont supportés par le cadre de tête de pince (33).

8. Pince de sertissage (52) selon la revendication 7, **caractérisée en ce que**
a) le cadre de tête de pince (33) comprend deux plaques de cadre (34a, 34b) s'étendant parallèlement, qui sont reliées entre elles par l'intermédiaire d'une tige de couplage (58 ; 59) et
b) une patte de traction (16 ; 17) présente un corps de base (20 ; 21) qui forme les évidements de couplage (45 ; 46) et qui s'étend dans un espace intercalaire (51) entre les plaques de cadre (34a, 34b),
c) dans laquelle la tige de couplage (58 ; 59) reliant les plaques de cadre (34a, 34b) est disposée dans les évidements partiels de couplage (47 ; 48).

9. Pince de sertissage (52) selon l'une des revendications précédentes, **caractérisée en ce que** les pattes de traction (16 ; 17) présentent des éléments d'actionnement (57) dépassant latéralement ou horizontalement du cadre de tête de pince (33).

10. Pince de sertissage (52) selon l'une des revendications précédentes, **caractérisée en ce que** les pattes de traction (16 ; 17) et la moitié de matrice mobile (37) présentent des surfaces de contact (53, 54) qui convertissent les forces de montage exercées sur les pattes de traction (16 ; 17) en une composante de force qui permet une augmentation de la contrainte du dispositif à ressort (43) et un déplacement de la moitié de matrice mobile (37) dans la direction de fermeture.

11. Pince de sertissage (52) selon l'une des revendications précédentes, **caractérisée en ce que** les pattes de traction (16) présentent, dans les parties d'extrémité opposées à la tête de pince de sertissage (32), des saillies ou des tenons de pivotement (14, 15) qui sont logés de manière rotative dans des alésages (12, 13) de plaques de leviers parallèles (4 ; 5) des leviers (2, 3).

12. Tête de pince de sertissage (32) pour une pince de sertissage (52) selon l'une des revendications 3 à 6 et 10 ou 11, avec un cadre de tête de pince (33) avec des dispositifs de couplage (63) par l'intermédiaire desquels la tête de pince de sertissage (32) peut être couplée avec un sous-ensemble d'actionnement de pince de sertissage (1), **caractérisée en ce que** les dispositifs de couplage (63) sont conçus comme des évidements de couplage (45, 46) ouverts d'un côté.

13. Sous-ensemble d'actionnement de pince de sertissage (1) pour une pince de sertissage selon l'une des revendications 7 à 11 avec
a) deux leviers (2, 3),
b) une tige de pivotement (8) par l'intermédiaire de laquelle les leviers (2, 3) sont reliés entre eux de manière pivotante,
c) deux pattes de traction (16, 17) qui sont articulées au niveau des leviers (2, 3) à une certaine distance des tiges de pivotement (8), et qui comprennent des dispositifs de couplage (63) par l'intermédiaire desquels le sous-ensemble d'actionnement de pince de sertissage (1) peut être couplé à une tête de pince de sertissage (32), **caractérisée en ce que**
d) les pattes de traction (16 ; 17) présentent des évidements de couplage (45, 46) ouverts d'un côté.

14. Procédé de montage d'une pince de sertissage (52) avec
a) deux leviers (2, 3),
b) une tige de pivotement (8) par l'intermédiaire de laquelle les leviers (2, 3) sont reliés entre eux de manière pivotante,
c) deux pattes de traction (16, 17) qui sont articulées au niveau des leviers (2, 3) à une certaine distance des tiges de pivotement (8),
d) une tête de pince de sertissage (32) avec
da) un cadre de tête de pince (33),
db) un dispositif à ressort (43) et
dc) une moitié de matrice (37) qui
- est guidée de manière coulissante dans la direction d'un axe de sertissage (38) au niveau du cadre de tête de pince (33)
- est appuyée, par l'intermédiaire du dispositif à ressort (43), contre le cadre de tête de pince (33), de sorte que le dispositif à ressort (43) contraint la moitié de matrice (37) dans une direction d'ouverture et
- comprend un logement de tige de pivotement (41) ouvert d'un côté,
e) dans laquelle les pattes de traction (16, 17) sont reliées par l'intermédiaire d'un dispositif de couplage (63) avec le cadre de tête de pince (33), la tige de pivotement (8) est disposée dans le logement de tige de pivotement (41) et un pivotement des leviers (2, 3) dans une direction de fermeture provoque un mouvement relatif de la moitié de matrice (37) par rapport au cadre de tête de pince (33) dans la direction de fermeture et
f) les dispositifs de couplage (63) présentent chacun un évidement de couplage (45 ; 46) ouvert d'un côté et un élément de couplage (22 ; 23), dans laquelle l'élément de couplage (22 ; 23) est introduit dans l'évidement de couplage (45, 46) et est sécurisé par le dispositif à ressort (43) contre une sortie hors de l'évidement de couplage (45, 46),
plus particulièrement d'une pince de sertissage (52) selon l'une des revendications 2 à 11,
avec les étapes suivantes :
a) introduction de la tige de pivotement (8) dans le logement de tige de pivotement (41) de la moitié de matrice (37) et
b) raccordement des pattes de traction (16, 17) avec la tête de pince de sertissage (32) grâce à l'entrée des éléments de couplage (22, 23) dans les évidements de couplage (45, 46) tout en comprimant simultanément le dispositif à ressort (43) de sorte que, du fait de la contrainte par le dispositif à ressort (43), les éléments de couplage (22, 23) sont sécurisés contre une sortie hors des évidements de couplage (45, 46).
